# NEW EUROPEAN PATENT SPECIFICATION

(11) **EP 2 796 522 B2**
(45) Date of publication and mention of the opposition decision: **08.06.2022**
(45) Mention of the grant of the patent: 19.06.2019
(21) Application number: 12859789.5
(22) Date of filing: 05.12.2012
(51) Int. Cl.: C09J 7/29, B32B 27/00, C09D 183/04, C09D 5/16, B08B 17/02, B63B 59/04

(54) **ADHESIVE TAPE PREVENTING ADHESION BY AQUATIC ORGANISMS**
KLEBEBAND ZUR ANHAFTUNGSVERHINDERUNG VON WASSERORGANISMEN
RUBAN ADHÉSIF EMPÊCHANT L'ADHÉRENCE D'ORGANISMES AQUATIQUES

(30) Priority: 21.12.2011 JP 2011279333; 21.12.2011 JP 2011279334; 19.03.2012 JP 2012062068; 29.03.2012 JP 2012075632
(43) Date of publication of application: 29.10.2014
(73) Proprietor: Nitto Denko Corporation, Ibaraki-shi, Osaka 567-8680 (JP)
(72) Inventor: KURATA, Naoki, Ibaraki-shi Osaka 567-8680 (JP); NAITO, Tomonari, Ibaraki-shi Osaka 567-8680 (JP); SUEYOSHI, Taiki, Ibaraki-shi Osaka 567-8680 (JP); SUZUKI, Satoru, Ibaraki-shi Osaka 567-8680 (JP); HARA, Kazutaka, Ibaraki-shi Osaka 567-8680 (JP)
(74) Representative: Hoffmann Eitle
(86) International application number: PCT/JP2012/081528
(87) International publication number: WO 2013/094411

(56) References cited:
- WO-A1-80/00554
- WO-A1-2004/111149
- WO-A1-2006/109600
- WO-A2-2012/064081
- JP-A- H0 633 024
- JP-A- H0 633 024
- JP-A- S5 196 830
- JP-A- S5 813 673
- JP-A- S63 217 012
- JP-A- 2001 131 413
- JP-A- 2002 069 246
- JP-A- 2002 069 246
- JP-B2- 3 276 583
- JP-U- S6 186 445
- US-B1- 6 925 952
- US-B1- 6 925 952
- Anonymous: "ASTM D5618 Standard Test Method for Measurement of Barnacle Adhesion Strength in Shear", ASTM International, 1 January 1994 (1994-01-01), pages 1-2,
- Nendza, M.: "Hazard assessment of silicone oils (polydimethylsiloxanes, PDMS) used in antifouling-/foul-release-products in the marine environment", MARINE POLLUTION BULLETIN, OXFORD, GB, vol. 54, no. 8, 27 July 2007 (2007-07-27), pages 1190-1196, GB ISSN: 0025-326X, DOI: 10.1016/j.marpolbul.2007.04.009
- Anonymous: "ASTM D3330 / D3330M - 02 Standard Test Method for Peel Adhesion of Pressure-Sensitive Tape", ASTM International, 1 January 1976 (1976-01-01), pages 1-6,
- Industrial standard ASTM D1141-98
- ASTM D3623-78a: Standard Test Method for Testing Antifouling Panels in Shallow Submergence

## Description

The present invention relates to apressure-sensitive adhesive tape for preventing adhesion of an aquatic organism. More specifically, the present invention relates to a pressure-sensitive adhesive tape for preventing adhesion of an aquatic organism for preventing an aquatic organism from adhering to an underwater structure (such as a ship, a buoy, a harbor facility, a maritime oil field facility, a water passage for power plant cooling water, a water passage for factory cooling water, or a water floating passage) to proliferate.

A marine organism such as a barnacle, an oyster, a blue mussel, a hydra, a serpula, a sea squirt, a moss animal, a sea lettuce, green laver, or attached diatom has been adhering to a portion of an underwater structure such as a ship in contact with seawater to proliferate, thereby causing an unpreferred state such as a reduction in facility mechanical performance, e.g., an increase in fluid resistance or a reduction in thermal conductivity, or diffusion of the adhering marine organism to overseas . In addition, an operation of removing the adhering marine organism requires a great deal of labor and an enormous amount of time, which results in economic loss.

Hitherto, the underwater structure has been painted with an antifouling paint in order that such damage as described above may be prevented. The antifouling paint contains a toxic antifouling agent, which, for example, was formerly an organotin compound and is currently cuprous oxide. Although adhesion and growth of the marine organism can be suppressed almost completely by the toxicity of the antifouling paint, the toxic antifouling agent such as the organotin compound or cuprous oxide causes a serious problem in the long run because the agent adversely affects a human body or an environment to no small extent. In addition, when the antifouling paint is dried after its painting, about 30 wt% of an organic solvent (VOC) volatilizes to adversely affect a work environment or a surrounding environment. In spray-type painting, in addition to discharge of the VOC to the atmosphere, 10 wt% to 20 wt% of the paint is said to be scattered to the surroundings by the wind. Meanwhile, when the structure painted with the antifouling paint that has been used for many years is repainted with a new one, the antifouling paint that has become old is peeled with a sandblast or a metal grinder. At that time, however, a large amount of coating film pieces each containing the toxic antifouling agent such as the organotin compound or cuprous oxide are scattered to the surroundings to adversely affect an operator or the environment. In addition, the peeled antifouling paint is treated as industrial waste. Accordingly, the paint has been causing a major problem.

As described above, the conventional antifouling paint has an adhesion-inhibiting action on a marine organism, but adversely affects a human body and an environment to a large extent, and many problems have remained unsolved to date.

In view of the foregoing, a pressure-sensitive adhesive tape obtained by bonding a copper foil and a pressure-sensitive adhesive onto each other through a primer has been proposed (see Patent Literatures 1 and 2). However, such pressure-sensitive adhesive tape involves a problem in that the tape may adversely affect the environment because its suppression of the adhesion of a marine organism is realized with the copper component of the copper foil. In addition, the peeling adhesive strength of such pressure-sensitive adhesive tape for an FRP plate is designed to be extremely large, specifically, 2.6 kg/25 mm or 7.5 kg/25 mm (after primer pretreatment). Accordingly, it is difficult to consider that the pressure-sensitive adhesive tape after its use can be easily peeled manually when the pressure-sensitive adhesive tape is replaced with another tape. In the end, a great deal of labor is needed because an action such as shaving is needed. In addition, copper is a substance having a specific gravity as heavy as 8.94 g/cm³ and hence the use of copper in a movable structure such as a ship is not preferred economically because the use deteriorates its fuel efficiency.

In addition, an antifouling tape formed of two layers, i.e., a silicone rubber and a pressure-sensitive adhesive has been proposed (see Patent Literature 3). However, the silicone rubber layer responsible for an antifouling effect is the silicone rubber itself because the layer is free of an antifouling agent such as an oil. When the layer is free of the antifouling agent, the layer can suppress the adhesion of a marine organism for a short time period because of its water repellency but cannot maintain its antifouling effect for a long time period. In addition, extreme concern is raised about the strength of such antifouling tape because the tape is constituted of the two layers, i.e., the silicone rubber and the pressure-sensitive adhesive. In general, the silicone rubber has an extremely low rupture point strength. Accordingly, the peeling of such antifouling tape after its use is not realistic because it is difficult to peel the tape while maintaining its tape state.

In addition, a sheet-shaped tape obtained by providing a silicone elastomer on a base material through an undercoating agent and providing a pressure-sensitive adhesive layer on the opposite side of the base material has been proposed (see Patent Literature 4). However, the application of the tape to a pressure-sensitive adhesive tape for preventing adhesion of an aquatic organism lacks reality because Patent Literature 4 does not have, for example, any description concerning the composition of a pressure-sensitive adhesive that can be used in water or any description concerning the adhesive strength of the tape. In addition, when an antifouling tape is applied to an underwater structure, its flexibility or stretchability needs to be designed so that the tape can be applied to a curved surface or an acute angle surface. In addition, the strength of the antifouling tape needs to be designed so that the base material may not break during the peeling of the tape after its use. However, Patent Literature 4 has no such description. Accordingly, the application of the tape to the pressure-sensitive adhesive tape for preventing adhesion of an aquatic organism lacks reality.

A pressure-sensitive adhesive tape has heretofore been rarely used in seawater. In addition, even when the tape is used in the seawater, an adhesive residue occurs on an adherend upon its peeling because its re-peelability after its use is not taken into consideration. Accordingly, a great deal of labor is needed for replacing the pressure-sensitive adhesive tape used in the seawater with a new pressure-sensitive adhesive tape. In addition, the pressure-sensitive adhesive tape used in the seawater involves a problem in that the tape is poor in reworkability at the time of its application. Specifically, once the pressure-sensitive adhesive tape is peeled, the pressure-sensitive adhesive tape cannot be reattached owing to the plastic deformation of its base material.

In addition, as described in the foregoing, a pressure-sensitive adhesive tape using an elastomer of a natural rubber or synthetic rubber as a main polymer for a pressure-sensitive adhesive has been proposed as a pressure-sensitive adhesive tape for preventing adhesion of an aquatic organism (see Patent Literature 2). The 180° adhesion of the pressure-sensitive adhesive tape for an FRP plate is designed to be extremely large, specifically, 2.6 kg/25 mm or 7.5 kg/25 mm (after primer pretreatment). Accordingly, it is difficult to consider that the pressure-sensitive adhesive tape after its use can be easily peeled manually when the tape is replaced with a new pressure-sensitive adhesive tape. In addition to the fact that the adhesion is extremely high as described above, its base material is a metal plate. Accordingly, once the pressure-sensitive adhesive tape after its use is peeled, the base material undergoes a plastic deformation and hence a problem in that the tape is poor in reworkability at the time of its application still remains.

[PTL 1] JP 63-62487 B
[PTL 2] JP 1-54397 B
[PTL 3] JP 3000101 B2
[PTL 4] JP 2002-69246 A

JP H06 33024 A describes a non-toxic stain-proofing sticking sheet.

An object of the present invention is to provide a pressure-sensitive adhesive tape for preventing adhesion of an aquatic organism that: can express good adhesion even in water; has good mechanical characteristics; facilitates its peeling operation; can maintain an antifouling effect over a long time period; has a small load on a human body or an environment; has a light weight; can maintain stable quality; and can effectively prevent the adhesion of an aquatic organism. Further, in addition to the object, another object of the present invention is preferably to provide a pressure-sensitive adhesive tape for preventing adhesion of an aquatic organism that: can alleviate labor needed for its peeling operation; suppresses the plastic deformation of its base material upon its peeling; and is excellent in reworkability at the time of its application.

The pressure-sensitive adhesive tape for preventing adhesion of an aquatic organism according to one embodiment of the present invention is specified in appended claim 1. Preferred embodiments are specified in the dependent claims.

According to one embodiment of the present invention, it is possible to provide the pressure-sensitive adhesive tape for preventing adhesion of an aquatic organism that: can express good adhesion even in water; has good mechanical characteristics; facilitates its peeling operation; can maintain an antifouling effect over a long time period; has a small load on a human body or an environment; has a light weight; can maintain stable quality; and can effectively prevent the adhesion of an aquatic organism. Further, according to another embodiment of the present invention, it is preferably possible to provide the pressure-sensitive adhesive tape for preventing adhesion of an aquatic organism that: can alleviate labor needed for its peeling operation; suppresses the plastic deformation of its base material upon its peeling; and is excellent in reworkability at the time of its application.

FIG. **1** is a schematic sectional view of an example of a pressure-sensitive adhesive tape for preventing adhesion of an aquatic organism of the present invention.
FIG. **2** is a photographic view showing the state of the result of an outdoor antifouling test of a pressure-sensitive adhesive tape (2) obtained in Example 2.
FIG. **3** is a photographic view showing the state of the result of an outdoor antifouling test of a pressure-sensitive adhesive tape (13) obtained in Example 13.
FIG. **4** is a photographic view showing the state of the result of an outdoor antifouling test of a pressure-sensitive adhesive tape (14) obtained in Example 14.
FIG. **5** is a photographic view showing the state of the result of an outdoor antifouling test of a pressure-sensitive adhesive tape (C1) obtained in Comparative Example 1.
FIG. **6** is a photographic view showing the state of the result of an outdoor antifouling test of a pressure-sensitive adhesive tape (C2) obtained in Comparative Example 2.
FIG. **7** is a schematic view of a method of measuring an adhesion strength between an antifouling layer and an aquatic organism.

A pressure-sensitive adhesive tape for preventing adhesion of an aquatic organism of the present invention includes an antifouling layer, a base material layer, and a pressure-sensitive adhesive layer in the stated order.

The pressure-sensitive adhesive tape for preventing adhesion of an aquatic organism of the present invention may include any appropriate other layer to the extent that the effects of the present invention are not impaired as long as the tape includes the antifouling layer, the base material layer, and the pressure-sensitive adhesive layer in the stated order. The thickness of the pressure-sensitive adhesive tape for preventing adhesion of an aquatic organism of the present invention is set to any appropriate thickness depending on the thickness of each layer in the tape to the extent that the effects of the present invention are not impaired. The thickness of the pressure-sensitive adhesive tape for preventing adhesion of an aquatic organism of the present invention is preferably from 50 µm to 5,000 µm.

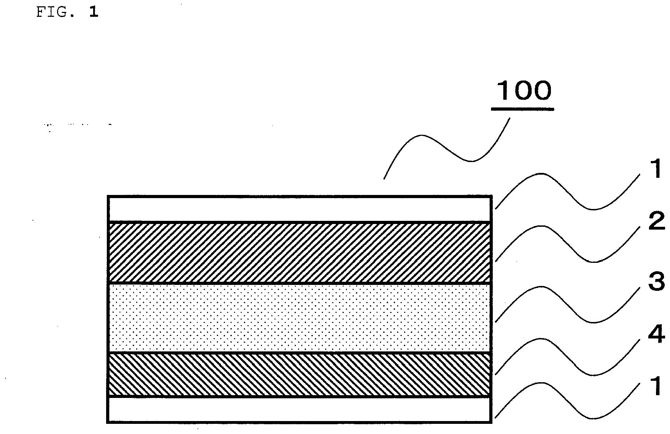

FIG. 1 illustrates a schematic sectional view of an example of the pressure-sensitive adhesive tape for preventing adhesion of an aquatic organism of the present invention. A pressure-sensitive adhesive tape **100** for preventing adhesion of an aquatic organism of the present invention includes an antifouling layer **2,** a base material layer **3,** and a pressure-sensitive adhesive layer **4** in the stated order. As illustrated in FIG. **1****,** the surface of the antifouling layer **2** or the surface of the pressure-sensitive adhesive layer **4** may be provided with a release film **1.**

In the pressure-sensitive adhesive tape for preventing adhesion of an aquatic organism of the present invention, an adhesion strength between the antifouling layer and the aquatic organism is preferably 0.10 N/mm² or less, more preferably 0.08 N/mm² or less, still more preferably 0.05 N/mm² or less, particularly preferably 0.04 N/mm² or less. A lower limit for the adhesion strength between the antifouling layer and the aquatic organism is desirably as small as possible. In actuality, however, in consideration of a material or the like, the value is preferably 0.005 N/mm² or more, more preferably 0.01 N/mm² or more. When the adhesion strength between the antifouling layer and the aquatic organism falls within the range, the pressure-sensitive adhesive tape for preventing adhesion of an aquatic organism of the present invention can prevent the adhesion of the aquatic organism in an extremely effective manner. It should be noted that a method of measuring the adhesion strength between the antifouling layer and the aquatic organism is described later.

The antifouling layer contains a silicone resin. The content of the silicone resin in the antifouling layer is from 50 wt% to 95 wt%. When the content of the silicone resin in the antifouling layer falls within the range, the antifouling effect of the antifouling layer can be sufficiently expressed and the mechanical characteristics of the antifouling layer can be sufficiently expressed. When the content of the silicone resin in the antifouling layer is less than 30 wt%, the mechanical characteristics of the antifouling layer may reduce. When the content of the silicone resin in the antifouling layer exceeds 98 wt%, the antifouling effect of the antifouling layer cannot be sufficiently expressed in some cases.

Any appropriate silicone resin may be adopted as the silicone resin to the extent that the effects of the present invention are not impaired. The number of kinds of the silicone resins may be only one, or may be two or more. Such silicone resin may be a silicone resin that is liquid at normal temperature, or may be a silicone resin that is solid at normal temperature. In addition, such silicone resin may be a condensation-type silicone resin, or may be an addition-type silicone resin. In addition, such silicone resin may be a one-component silicone resin to be dried alone, or may be a two-component silicone resin to be compounded with a curing agent. In the present invention, out of those resins, a one-component room temperature vulcanizing (RTV) resin or a two-component room temperature vulcanizing (RTV) resin is preferred. Examples of the one-component RTV resin include KE-3475, KE-45S, KE-445, KE-44, KE-441, KE-3497, and KE-4896 manufactured by Shin-Etsu Chemical Co., Ltd. Examples of the two-component RTV resin include KE-106, KE-66, KE-1031, and KE-1800 manufactured by Shin-Etsu Chemical Co., Ltd.

In order that the easy removability of an aquatic organism in the pressure-sensitive adhesive tape for preventing adhesion of an aquatic organism of the present invention may be improved, the silicone resin is preferably a silicone resin having the following physical property: the surface of the resin undergoes an elastic deformation by virtue of, for example, a water pressure at the time of the removal of the organism by water washing to facilitate the peeling of an adhering substance. Such silicone resin has a 100% modulus (tensile stress) of preferably from 0.1 MPa to 10 MPa, more preferably from 0.1 MPa to 6 MPa. In addition, such silicone resin is preferably soluble in an organic solvent.

The antifouling layer contains an antifouling agent. The number of kinds of the antifouling agents may be only one, or may be two or more. When the antifouling layer contains the antifouling agent, the antifouling agent can express an action of maintaining its high antifouling effect for a long time period because of the following reasons: the agent migrates to the surface of the silicone resin as a matrix and covers the surface with an antifouling substance to suppress the adhesion of an aquatic organism to the surface of the silicone resin, and the agent is nonhydrolyzable.

The content of the antifouling agent in the antifouling layer with respect to the silicone resin is from 5 wt% to 100 wt%. When the content of the antifouling agent with respect to the silicone resin falls within the range, the antifouling effect of the antifouling layer can be sufficiently expressed, and the external appearance characteristics and mechanical characteristics of the antifouling layer can be sufficiently expressed. When the content of the antifouling agent with respect to the silicone resin is less than 2 wt%, the antifouling effect of the antifouling layer cannot be sufficiently expressed in some cases. When the content of the antifouling agent with respect to the silicone resin exceeds 200 wt%, the external appearance of a final molded article or coating film may be unsatisfactory, and the antifouling layer may be reduced in strength to be unable to maintain its antifouling property.

In general, examples of antifouling agents include a silicone oil, a liquid paraffin, a surfactant, a wax, petrolatum, animal fats, and a fatty acid. In the present invention, the antifouling agent is at least one kind selected from a dimethyl silicone oil and a phenyl methyl silicone oil represented by the general formula (I) 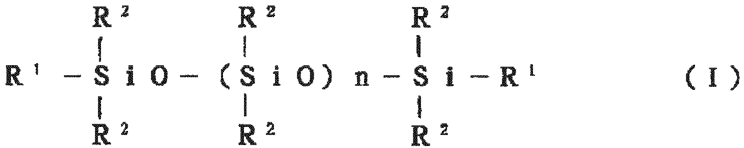 wherein n represents an integer of from 0 to 150, in the dimethyl silicone oil all of R¹'s and R²'s each represent a methyl group, and the phenyl methyl silicone oil is obtained by substituting part of the methyl groups of any such dimethyl silicone oil with phenyl groups.

The silicone oil is preferably free of reactivity with the silicone resin or self-condensability. Any appropriate silicone oil may be adopted as such silicone oil to the extent that the effects of the present invention are not impaired. Such silicone oil is preferably incompatible with an organopolysiloxane in the silicone resin to some extent, and is a silicone oil represented by the general formula (I) because the antifouling effect can be maintained over a long time period.

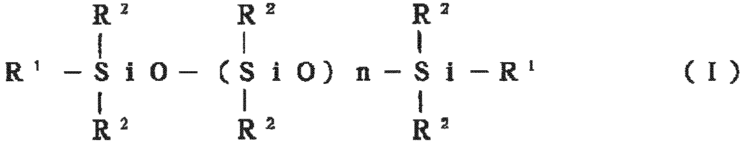

In the general formula (I), n represents an integer of from 0 to 150.

The silicone oil represented by the general formula (I) has a number-average molecular weight of preferably from 180 to 20,000, more preferably from 1,000 to 10,000.

The silicone oil represented by the general formula (I) has a viscosity of preferably from 10 centistokes to 10,000 centistokes, more preferably from 100 centistokes to 5,000 centistokes.

The silicone oil represented by the general formula (I) includes: a dimethyl silicone oil in which all of R¹'s and R²'s each represent a methyl group; and a phenyl methyl silicone oil obtained by substituting part of the methyl groups of any such dimethyl silicone oil with phenyl groups.

Examples of commercially available silicone oils, including silicone oils represented by the general formula (I), include: KF-96L, KF-96, KF-69, KF-99, KF-50, KF-54, KF-410, KF-412, KF-414, and FL manufactured by Shin-Etsu Chemical Co., Ltd; and BY16-846, SF8416, SH200, SH203, SH230, SF8419, FS1265, SH510, SH550, SH710, FZ-2110, and FZ-2203 manufactured by Dow Corning Toray Co., Ltd.

Examples of the surfactant include an anionic surfactant, a cationic surfactant, and a nonionic surfactant.

A diatom adhesion-preventing agent, an agricultural chemical, a drug (such as medetomidine), an enzyme activity inhibitor (such as an alkylphenol or an alkylresorcinol), or an organism repellent may in general be used as an antifouling agent. The use of any such antifouling agent additionally improves a preventing effect on the adhesion of an aquatic organism such as a diatom or a barnacle.

The antifouling layer may contain any appropriate other additive to the extent that the effects of the present invention are not impaired.

Any appropriate thickness may be adopted as the thickness of the antifouling layer depending on, for example, the applications and use environment of the pressure-sensitive adhesive tape for preventing adhesion of an aquatic organism of the present invention. The thickness of the antifouling layer is preferably from 5 µm to 500 µm. When the thickness of the antifouling layer falls within the range, the antifouling effect effectively works for a sufficiently long time period. In addition, the tape is excellent in handleability, unevenness at a joint portion of the tapes is small, and dirt hardly adheres . When the thickness of the antifouling layer is less than 5 µm, the layer may not be practical because the time period for which its antifouling effect effectively works shortens. When the thickness of the antifouling layer is more than 500 µm, the pressure-sensitive adhesive tape for preventing adhesion of an aquatic organism of the present invention becomes thick and increases in weight. Accordingly, there is a possibility that its handleability deteriorates, the unevenness at the joint portion of the tapes enlarges, and the dirt is liable to adhere.

Any appropriate base material layer may be adopted as the base material layer to the extent that the effects of the present invention are not impaired. A material for such base material layer is preferably excellent in water resistance, strength, flexibility, and breaking property. Examples of such material for the base material layer include a polyurethane resin, a polyurethane acrylic resin, a rubber-based resin, a vinyl chloride resin, a polyester resin, a silicone resin, an elastomer, a fluororesin, a polyamide resin, and a polyolefin resin (such as polyethylene or polypropylene) . The number of kinds of such materials for the base material layer may be only one, or may be two or more.

The elongation of the base material layer is 100% or more, preferably 120% or more, still more preferably 150% or more. When the elongation of the base material layer is 100% or more, the pressure-sensitive adhesive tape for preventing the adhesion of an aquatic organism of the present invention can satisfactorily follow the shapes of various adherends and be satisfactorily bonded onto a flat surface. In addition, the tape can be satisfactorily bonded onto, for example, a curved surface portion, 90°-angle portion, or acute angle portion present on the surface of a ship body. When the elongation of the base material layer is less than 100%, the tape cannot sufficiently follow the shapes of the various adherends, and hence a wrinkle or a non-adhesion portion of an adhesive occurs, which may be responsible for an external appearance failure or an adhesion failure. An upper limit for the elongation of the base material layer is preferably 2,000% or less from the viewpoint of the strength of the base material layer.

The rupture point stress of the base material layer is 10 MPa or more, preferably 12 MPa or more, still more preferably 15 MPa or more. When the rupture point stress of the base material layer falls within the range, the cutting of the base material layer upon peeling of the pressure-sensitive adhesive tape for preventing adhesion of an aquatic organism of the present invention that has already been used from an adherend can be suppressed. When the rupture point stress of the base material layer is less than 10 MPa, the base material layer is frequently cut upon peeling of the pressure-sensitive adhesive tape for preventing adhesion of an aquatic organism of the present invention that has already been used from the adherend, and hence working efficiency may remarkably deteriorate. An upper limit for the rupture point stress of the base material layer is preferably 200 MPa or less from the viewpoint of the handleability of the base material layer.

The modulus of elasticity E of the base material layer is preferably 4,000 MPa or less, more preferably 1,000 MPa or less, still more preferably 100 MPa or less, particularly preferably 50 MPa or less. When the modulus of elasticity of the base material layer is 4,000 MPa or less, the pressure-sensitive adhesive tape for preventing adhesion of an aquatic organism of the present invention can satisfactorily follow the shapes of various adherends and hence its applicability improves. A lower limit for the modulus of elasticity E of the base material layer is preferably 0.1 MPa or more from the viewpoint of the handleability of the base material layer.

The modulus, of elasticity of the base material layer at 23°C is preferably from 0.1 MPa to 100 MPa, more preferably from 0.2 MPa to 70 MPa, still more preferably from 0.5 MPa to 50 MPa. When the modulus of elasticity of the base material layer at 23°C falls within the range, there can be provided a pressure-sensitive adhesive tape for preventing adhesion of an aquatic organism that: can alleviate labor needed for its peeling operation; suppresses the plastic deformation of its base material upon its peeling; and is excellent in reworkability at the time of its application. When the modulus of elasticity of the base material layer at 23°C is less than 0.1 MPa, such inconvenience as described below may occur: it becomes difficult to handle the pressure-sensitive adhesive tape for preventing adhesion of an aquatic organism owing to an unnecessary deformation or the like. When the modulus of elasticity of the base material layer at 23°C exceeds 100 MPa, the following inconvenience may occur: the base material hardly elongates upon peeling of the pressure-sensitive adhesive tape for preventing adhesion of an aquatic organism of the present invention, and hence a reduction in adhesion of the tape hardly occurs.

The elongation recovery ratio of the base material layer at 23°C is preferably 70% or more, more preferably 80% or more, still more preferably 85% or more. When the elongation recovery ratio of the base material layer at 23°C is 70% or more, there can be provided a pressure-sensitive adhesive tape for preventing adhesion of an aquatic organism that: suppresses the plastic deformation of the base material layer upon its peeling; and is excellent in reworkability at the time of its application. The pressure-sensitive adhesive tape for preventing adhesion of an aquatic organism of the present invention, which is attached onto an adherend such as a ship body or a marine structure, is required to have such reworkability that the tape can be peeled and reattached upon its attachment onto a wrong site. When the shape of the base material layer changes owing to its plastic deformation upon peeling of the tape after its attachment onto the adherend, it becomes difficult to reattach the tape. Accordingly, the base material layer is required to have such physical property as not to undergo a plastic deformation owing even to the stress of the peeling and is required to have such physical property (elongation recovery ratio) as to return to its initial shape again even after its deformation.

The rupture elongation of the base material layer at 23°C is preferably from 150% to 1,800%, still more preferably from 200% to 1,500%. When the rupture elongation of the base material layer at 23°C falls within the range, there can be provided a pressure-sensitive adhesive tape for preventing adhesion of an aquatic organism that: can additionally alleviate labor needed for its peeling operation; additionally suppresses the plastic deformation of its base material upon its peeling; and is additionally excellent in reworkability at the time of its application. The base material elongates upon peeling of the tape at a peel angle as shallow as 5° to 60°, and hence stress concentration at a peeling point enlarges. Accordingly, the tape is reduced in adhesion and can express good peelability. In addition, when the pressure-sensitive adhesive tape for preventing adhesion of an aquatic organism is attached onto an adherend such as a ship, the tape needs to be capable not only of being attached onto a flat surface but also of satisfactorily following a shape such as a curved surface, a 90°-angle surface, or an acute angle surface. When the tape cannot follow such various shapes as described above, an external appearance failure such as a wrinkle or floating may occur in its surface after the attachment.

The rupture stress of the base material layer at 23°C is preferably from 10 MPa to 200 MPa, still more preferably from 12 MPa to 150 MPa, particularly preferably from 15 MPa to 100 MPa. When the rupture stress of the base material layer at 23°C falls within the range, there can be provided a pressure-sensitive adhesive tape for preventing adhesion of an aquatic organism that: can additionally alleviate labor needed for its peeling operation; additionally suppresses the plastic deformation of its base material upon its peeling; and is additionally excellent in reworkability at the time of its application. When the rupture stress of the base material layer at 23°C is less than 10 MPa, the base material layer is frequently cut upon peeling of the tape from an adherend after its use, and hence working efficiency may remarkably reduce.

The base material layer contains an elastomer resin. Any appropriate elastomer resin may be adopted as the elastomer resin to the extent that the effects of the present invention are not impaired. Examples of such elastomer resin include a vulcanized rubber and a thermoplastic elastomer. Examples of the thermoplastic elastomer include a styrene-based elastomer, an olefin-based elastomer, a vinyl chloride-based elastomer, a urethane-based elastomer, an ester-based elastomer, and an amide-based elastomer. When the base material layer contains the elastomer resin, the content of the elastomer resin in the base material layer is preferably 50 wt% or more, more preferably from 60 wt% to 100 wt%, still more preferably from 70 wt% to 99 wt%, particularly preferably from 80 wt% to 98 wt%, most preferably from 90 wt% to 97 wt%.

The number of kinds of the elastomer resins in the base material layer may be only one, or may be two or more. When the base material layer contains the elastomer resin, there can be provided a pressure-sensitive adhesive tape for preventing adhesion of an aquatic organism that: can be easily attached onto a site except a flat surface such as a curved surface or an acute angle surface with good workability; and hardly causes an external appearance failure such as a wrinkle or floating in its surface after the attachment.

The elastomer resin is preferably a urethane-based elastomer. Examples of the urethane-based elastomer include ester-based polyurethane, ether-based polyurethane, and a polyurethane acrylic resin. The adoption of the urethane-based elastomer as the elastomer resin can provide a pressure-sensitive adhesive tape for preventing adhesion of an aquatic organism that: can be additionally easily attached onto a site except a flat surface such as a curved surface or an acute angle surface with good workability; and additionally hardly causes an external appearance failure such as a wrinkle or floating in its surface after the attachment.

The polyurethane acrylic resin has an acrylic component and a urethane component. The polyurethane acrylic resin is more specifically a composite polymer containing a (meth) acrylic polymer and a urethane polymer. A weight ratio "(meth)acrylic polymer/urethane polymer" of the (meth)acrylic polymer to the urethane polymer in the polyurethane acrylic resin is preferably from 1/99 to 80/20. When the ratio " (meth) acrylic polymer/urethane polymer" is less than 1/99, the viscosity of a precursor mixture may increase to deteriorate workability. When the ratio exceeds 80/20, the flexibility or strength of the polyurethane acrylic resin may not be obtained.

It should be noted that the term "(meth) acryl" as used in the present invention means "acryl" and/or "methacryl."

The (meth)acrylic polymer in the polyurethane acrylic resin is preferably a polymer obtained by using monomer components containing a (meth) acrylic acid-based monomer and a monofunctional (meth)acrylic monomer. The (meth)acrylic polymer in the polyurethane acrylic resin is particularly preferably a polymer obtained by using monomer components containing a monofunctional (meth)acrylic monomer whose homopolymer has a glass transition temperature (Tg) of 0°C or more. The (meth) acrylic polymer in the polyurethane acrylic resin is more preferably a polymer obtained by using monomer components further containing a monofunctional (meth)acrylic monomer whose homopolymer has a glass transition temperature (Tg) of less than 0°C in addition to the monofunctional (meth)acrylic monomer whose homopolymer has a glass transition temperature (Tg) of 0°C or more.

The (meth)acrylic acid-based monomer means a (meth)acrylic monomer having a carboxyl group. Examples of the (meth)acrylic acid-based monomer include acrylic acid, methacrylic acid, maleic acid, and crotonic acid. The (meth)acrylic acid-based monomer is preferably, for example, acrylic acid because the effects of the present invention can be additionally expressed.

The content of the (meth)acrylic acid-based monomer in the monomer components serving as raw materials for the polyurethane acrylic resin is preferably from 1 wt% to 15 wt%, more preferably from 2 wt% to 10 wt%. When the content of the (meth) acrylic acid-based monomer in the monomer components serving as the raw materials for the polyurethane acrylic resin is less than 1 wt%, a reaction for synthesizing the polyurethane acrylic resin may require a long time period or the polyurethane acrylic resin may not have a sufficient strength. When the content of the (meth) acrylic acid-based monomer in the monomer components serving as the raw materials for the polyurethane acrylic resin exceeds 15 wt%, the coefficient of water absorption of the polyurethane acrylic resin may increase to cause a problem in terms of its water resistance. The (meth)acrylic acid-based monomer largely affects compatibility between the urethane component and acrylic component in the polyurethane acrylic resin.

Examples of the monofunctional (meth)acrylic monomer having a Tg of 0°C or more include acryloylmorpholine, isobornyl acrylate, dicyclopentanyl acrylate, t-butyl acrylate, cyclohexyl acrylate, and lauryl acrylate. The number of kinds of the monofunctional (meth) acrylic monomers each having a Tg of 0°C or more may be only one, or may be two or more.

The monofunctional (meth)acrylic monomer having a Tg of 0°C or more is preferably at least one kind selected from acryloylmorpholine, isobornyl acrylate, and dicyclopentanyl acrylate because the effects of the present invention can be additionally expressed, and the monomer is more preferably, for example, isobornyl acrylate.

The content of the monofunctional (meth) acrylic monomer having a Tg of 0°C or more in the (meth) acrylic polymer in the polyurethane acrylic resin is preferably from 20 wt% to 99 wt%, more preferably from 30 wt% to 98 wt%. When the content of the monofunctional (meth) acrylic monomer having a Tg of 0 °C or more in the (meth) acrylic polymer in the polyurethane acrylic resin is less than 20 wt%, the polyurethane acrylic resin may not have a sufficient strength. When the content of the monofunctional (meth)acrylic monomer having a Tg of 0°C or more in the (meth) acrylic polymer in the polyurethane acrylic resin exceeds 99 wt%, the rigidity of the polyurethane acrylic resin may rise so much that the resin becomes brittle.

Examples of the monofunctional (meth)acrylic monomer having a Tg of less than 0°C include n-butyl acrylate, 2-ethylhexyl acrylate, isooctyl acrylate, isobutyl acrylate, 2-methoxyethyl acrylate, tetrahydrofluorofuryl acrylate, phenoxyethyl acrylate, ethoxyethyl acrylate, and 3-methoxybutyl acrylate. The number of kinds of the monofunctional (meth)acrylic monomers each having a Tg of less than 0°C may be only one, or may be two or more.

The monofunctional (meth) acrylic monomer having a Tg of less than 0°C is preferably, for example, n-butyl acrylate because the effects of the present invention can be additionally expressed.

The content of the monofunctional (meth) acrylic monomer having a Tg of less than 0°C in the (meth) acrylic polymer in the polyurethane acrylic resin is preferably 50 wt% or less, more preferably 45 wt% or less. When the content of the monofunctional (meth)acrylic monomer having a Tg of less than 0°C in the (meth) acrylic polymer in the polyurethane acrylic resin exceeds 50 wt%, the polyurethane acrylic resin may not have a sufficient strength.

The kinds, combination, usages, and the like of the (meth) acrylic monomers such as the (meth) acrylic acid-based monomer and monofunctional (meth)acrylic monomer in the raw material monomers for the (meth) acrylic polymer in the polyurethane acrylic resin are appropriately determined in consideration of compatibility with urethane, polymerizability at the time of photocuring with a radiation or the like, and the characteristics of a polymer to be obtained.

The raw material monomers for the (meth)acrylic polymer in the polyurethane acrylic resin may contain any appropriate other monomer to the extent that the effects of the present invention are not impaired. Examples of such other monomer include vinyl acetate, vinyl propionate, styrene, acrylamide, methacrylamide, a mono- or diester of maleic acid and a derivative thereof, N-methylolacrylamide, glycidyl acrylate, glycidyl methacrylate, N,N-dimethylaminoethyl acrylate, N,N-dimethylaminopropylmethacrylamide, 2-hydroxypropyl acrylate, N,N-dimethylacrylamide, N,N-diethylacrylamide, an imide acrylate, N-vinylpyrrolidone, oligoester acrylate, ε-caprolactone acrylate, dicyclopentanyl (meth)acrylate, dicyclopentenyl (meth)acrylate, methoxylated cyclododecatriene acrylate, and methoxyethyl acrylate. The number of kinds of the other monomers may be only one, or may be two or more. The kinds and usages of the other monomers may be appropriately selected depending on purposes.

The raw material monomers for the (meth)acrylic polymer in the polyurethane acrylic resin may contain any other polyfunctional monomer to the extent that the effects of the present invention are not impaired. Examples of such polyfunctional monomer include ethylene glycol di(meth)acrylate, propylene glycol di(meth)acrylate, hexanediol di(meth)acrylate, neopentyl glycol di(meth)acrylate, trimethylolpropane tri(meth)acrylate, pentaerythritol tri(meth)acrylate, dipentaerythritol hexa(meth)acrylate, urethane acrylate, epoxy acrylate, and polyester acrylate. Such polyfunctional monomer is preferably, for example, trimethylolpropane tri(meth)acrylate because the effects of the present invention can be additionally expressed.

When the raw material monomers for the (meth) acrylic polymer in the polyurethane acrylic resin contain the other polyfunctional monomer, its content is preferably from 1 wt% to 20 wt% with respect to the (meth) acrylic monomers in the raw material monomers. When the content is 1 wt% or more, the cohesive strength of the polyurethane acrylic resin can be maintained at a sufficiently high level. When the content is 20 wt% or less, the modulus of elasticity of the polyurethane acrylic resin does not become excessively high, and hence the tape can satisfactorily follow the unevenness of the surface of an adherend.

The urethane polymer in the polyurethane acrylic resin is preferably obtained by causing a diol and a diisocyanate to react with each other. A catalyst may be used for a reaction between a hydroxyl group of the diol and the isocyanate.

As a low-molecular weight diol, there are given, for example, dihydric alcohols such as ethylene glycol, diethylene glycol, propylene glycol, butylene glycol, and hexamethylene glycol.

As a high-molecular weight diol, there are given, for example: polyether polyol obtained by subjecting, for example, ethylene oxide, propylene oxide, or tetrahydrofuran to addition polymerization; polyester polyol formed of a polycondensate of an alcohol such as the above-mentioned dihydric alcohol, 1,4-butanediol, or 1, 6-hexanediol and a dibasic acid such as adipic acid, azelaic acid, or sebacic acid; acrylic polyol; carbonate polyol; epoxy polyol; and caprolactone polyol. Of those, polyoxytetramethylene glycol (PTMG) or polyalkylene carbonate diol (PCD) is a preferred example of the high-molecular weight diol because the effects of the present invention can be additionally expressed.

The acrylic polyol is, for example, a copolymer of a hydroxyl group-containing substance and a (meth) acrylic monomer as well as a copolymer of monomers each having a hydroxyl group.

The epoxy polyol is, for example, an amine-modified epoxy resin.

In the production of the urethane polymer in the polyurethane acrylic resin, only one kind of the diols may be used, or two or more kinds thereof may be used in consideration of, for example, solubility in the (meth)acrylic monomers and reactivity with the isocyanate. Increasing a urethane hard segment amount based on the low-molecular weight diol is effective in improving the strength of the polyurethane acrylic resin. When importance is placed on the elongation of the polyurethane acrylic resin, it is effective to use a diol having a large molecular weight alone. In general, the polyether polyol is inexpensive and has good water resistance. The polyester polyol can improve the strength of the polyurethane acrylic resin.

Examples of the diisocyanate include: aromatic, aliphatic, and alicyclic diisocyanates; dimers and trimers of those diisocyanates; and polyphenylmethane diisocyanate. The number of kinds of the diisocyanates may be only one, or may be two or more.

Examples of the aromatic, aliphatic, and alicyclic diisocyanates include tolylene diisocyanate, diphenylmethane diisocyanate, hexamethylene diisocyanate, xylylene diisocyanate, hydrogenated xylylene diisocyanate (HXDI), isophorone diisocyanate, hydrogenated diphenylmethane diisocyanate, 1,5-naphthylene diisocyanate, 1,3-phenylene diisocyanate, 1,4-phenylene diisocyanate, butane-1,4-diisocyanate, 2,2,4-trimethylhexamethylene diisocyanate, 2,4,4-trimethylhexamethylene diisocyanate, cyclohexane-1,4-diisocyanate, dicyclohexylmethane-4,4-diisocyanate, 1,3-bis(isocyanatomethyl)cyclohexane, methylcyclohexane diisocyanate, and m-tetramethylxylylene diisocyanate.

Examples of the trimers of the aromatic, aliphatic, and alicyclic diisocyanates include isocyanurate-type, biuret-type, and allophanate-type trimers.

The diisocyanate is preferably, for example, hexamethylene diisocyanate (HDI), hydrogenated tolylene diisocyanate (HTDI), hydrogenated 4,4-diphenylmethane diisocyanate (HMDI), isophorone diisocyanate (IPDI), or hydrogenated xylylene diisocyanate (HXDI) because the effects of the present invention can be additionally expressed.

With regard to a use ratio between the diol component and diisocyanate component for forming the urethane polymer, a ratio "NCO/OH" (equivalent ratio) is preferably from 1.1 to 2.0, more preferably from 1.15 to 1.35. When the ratio "NCO/OH" (equivalent ratio) is less than 1.1, the strength of the polyurethane acrylic resin may reduce. When the ratio "NCO/OH" (equivalent ratio) exceeds 2.0, it may be impossible to sufficiently secure the elongation and flexibility of the polyurethane acrylic resin.

A hydroxyl group-containing (meth) acrylic monomer may be added to the urethane polymer. The addition of the hydroxyl group-containing (meth)acrylic monomer to the urethane polymer enables the introduction of a (meth)acryloyl group to a molecular terminal of a urethane prepolymer, imparts copolymerizability with the (meth)acrylic monomers, improves compatibility between the urethane component and the acrylic component, and can achieve improvements in S-S characteristics such as a rupture strength. The usage of the hydroxyl group-containing (meth)acrylic monomer is preferably from 0.1 wt% to 10 wt%, more preferably from 1 wt% to 5 wt% with respect to the urethane polymer because the effects of the present invention can be additionally expressed.

Examples of the hydroxy group-containing (meth)acrylic monomer include hydroxyethyl (meth)acrylate, hydroxypropyl (meth)acrylate, hydroxybutyl (meth)acrylate, and hydroxyhexyl (meth)acrylate.

The polyurethane acrylic resin preferably has a heterogeneous network structure in which the (meth) acrylic polymer and the urethane polymer are bonded to each other by a graft structure or a cross-linked structure. In the case of an IPN structure (interpenetrating polymer network layer) in which the (meth) acrylic polymer and the urethane polymer each independently have a cross-linked structure, or a semi-IPN structure in which one of the (meth)acrylic polymer and the urethane polymer has a cross-linked structure, and the other has a polymer chain of a linear structure to penetrate the cross-linked structure, a stress at the time of the extension of the polyurethane acrylic resin may be hardly expressed.

When the base material layer contains the polyurethane acrylic resin as the elastomer resin, the base material layer may be formed, for example, by: performing the reaction between the diol and the diisocyanate in the (meth)acrylic monomers by using the (meth) acrylic monomers as a diluent to form the urethane polymer; applying a mixture containing the (meth)acrylic monomers and the urethane polymer as main components onto a base material or the like (subjected to release treatment as required); irradiating the mixture with an ionizing radiation such as an α-ray, a β-ray, a γ-ray, a neutron beam, or an electron beam, a radiation such as UV light, visible light, or the like in accordance with the kind and the like of a photopolymerization initiator to cure the mixture; and peeling and removing the base material or the like after the curing. Alternatively, the base material layer may be obtained in a form in which the base material layer is laminated on the base material or the like instead of the peeling and removal of the base material or the like.

When the base material layer contains the polyurethane acrylic resin as the elastomer resin, the base material layer may be obtained more specifically, for example, by: dissolving the diol in the (meth) acrylic monomers; adding the diisocyanate or the like to the solution to perform a reaction with the diol to adjust the viscosity of the solution; applying the solution onto a support or the like, or as required, a release-treated surface of the support or the like; and curing the applied solution with a low-pressure mercury lamp or the like. In the method, during urethane synthesis, the (meth) acrylic monomers may be added in one portion, or may be added in several portions. In addition, the diol may be caused to react after the diisocyanate has been dissolved in the (meth)acrylic monomers. According to the method, the molecular weight of urethane to be finally obtained can be designed to any appropriate magnitude because the molecular weight is not limited and high-molecular weight polyurethane can be produced. In order that polymerization inhibition by oxygen may be avoided, oxygen may be blocked by placing a release-treated sheet (such as a separator) on the mixture applied onto the support or the like, or an oxygen concentration may be reduced by placing the base material in a container filled with an inert gas.

The kind of the radiation or the like, the kind of the lamp to be used in the irradiation, and the like may be appropriately selected. Examples of such lamp include: low-pressure lamps such as a fluorescent chemical lamp, a black light, and a bactericidal lamp; and high-pressure lamps such as a metal halide lamp and a high-pressure mercury lamp.

The dose of UV light or the like may be appropriately set depending on the characteristics of the base material layer. In general, the dose of UV light is preferably from 100 mJ/cm² to 5,000 mJ/cm², more preferably from 1,000 mJ/cm² to 4,000 mJ/cm², still more preferably from 2,000 mJ/cm² to 3,000 mJ/cm². A dose of UV light of less than 100 mJ/cm² may make it impossible to obtain a sufficient polymerization rate, and a dose of more than 5,000 mJ/cm² may be responsible for the deterioration of the base material layer. A temperature upon irradiation with UV light or the like may be set to any appropriate temperature depending on purposes . When the temperature upon irradiation with UV light or the like is excessively high, a termination reaction due to heat of polymerization is liable to occur, which is liable to be responsible for the reduction of the characteristics. Accordingly, the temperature upon irradiation with UV light or the like is preferably 70°C or less, more preferably 50°C or less, still more preferably 30°C or less.

In the preparation of the polyurethane acrylic resin, a mixture containing at least the urethane polymer (such as the mixture containing the (meth)acrylic monomers and the urethane polymer as main components) preferably contains a photopolymerization initiator.

Examples of the photopolymerization initiator include: a benzoin ether such as benzoin methyl ether or benzoin isopropyl ether; a substituted benzoin ether such as anisole methyl ether; a substituted acetophenone such as 2,2-diethoxyacetophenone or 2,2-dimethoxy-2-phenylacetophenone; a substituted α-ketol such as 1-hydroxycyclohexyl phenyl ketone or 2-methyl-2-hydroxypropiophenone; an aromatic sulfonyl chloride such as 2-naphthalenesulfonyl chloride; and a photoactive oxime such as 1-phenyl-1,1-propanedione-2-(o-ethoxycarbonyl)-oxime.

The base material layer may contain any appropriate additive to the extent that the effects of the present invention are not impaired. Examples of such additive include an olefin-based resin, a silicone-based polymer, a liquid acrylic copolymer, a tackifier, an antioxidant, a hindered amine-based light stabilizer, a UV absorbing agent, an antioxidizing agent, an antistatic agent, polyethylene imine, a fatty acid amide, a fatty acid ester, a phosphoric acid ester, a lubricant, a surfactant, a filler, and a pigment (such as calcium oxide, magnesium oxide, silica, zinc oxide, titanium oxide, or carbon black).

The base material layer preferably contains a UV absorbing agent. When the base material layer contains the UV absorbing agent, the weatherability of the pressure-sensitive adhesive tape for preventing adhesion of an aquatic organism of the present invention improves. When the base material layer does not contain any UV absorbing agent, the base material is liable to deteriorate owing to sunlight in outdoor use and hence it may become difficult to maintain the original base material strength. In addition, when the base material deteriorates, the base material layer is frequently cut upon peeling of the pressure-sensitive adhesive tape for preventing adhesion of an aquatic organism of the present invention that has already been used from an adherend, and hence working efficiency may remarkably deteriorate.

Any appropriate thickness may be adopted as the thickness of the base material layer depending on, for example, the applications and use environment of the pressure-sensitive adhesive tape for preventing adhesion of an aquatic organism of the present invention. The thickness of the base material layer is preferably from 1 µm to 1,000 µm, more preferably from 10 µm to 800 µm, still more preferably from 20 µm to 500 µm. When the thickness of the base material layer is caused to fall within the range, the pressure-sensitive adhesive tape for preventing adhesion of an aquatic organism of the present invention can be easily attached onto a site except a flat surface such as a curved surface or an acute angle surface with good workability, and hardly causes an external appearance failure such as a wrinkle or floating in its surface after the attachment. When the thickness of the base material layer is excessively small, the layer may not be practical because its handleability deteriorates and the layer cannot serve as a base material. When the thickness of the base material layer is excessively large, there is a possibility that the tape cannot sufficiently follow the shape of an adherend, unevenness at a joint portion of the tapes enlarges, and dirt is liable to adhere.

A primer may be applied onto the base material layer in advance or a silane coupling agent may be added to the layer in advance in order that its adhesiveness with the antifouling layer may be improved. When the antifouling layer contains a silicone resin, its adhesiveness with the base material layer may be low owing to low surface energy as a characteristic of the silicone resin. When the adhesiveness between the antifouling layer and the base material layer is low, the antifouling layer that exhibits an antifouling effect peels from the base material layer owing to impact or physical damage during use, and hence it may be impossible to maintain its original antifouling effect. Accordingly, the primer can be applied onto the surface of the base material layer in advance to improve the adhesiveness with the antifouling layer, or a silanol group or alkoxysilane group that reacts with the silicone resin can be introduced into the base material layer by the silane coupling agent and subjected to a condensation reaction with a reactive group on the base material layer at the time of the application of a condensation-type silicone resin to improve the adhesiveness.

The number of the kinds of the silane coupling agents may be only one, or may be two or more. As a specific silane coupling agent that is commercially available, there are given, for example, KBM5103, KBM1003, KBM903, KBM403, and KBM802 manufactured by Shin-Etsu Chemical Co., Ltd.

When the base material layer contains the silane coupling agent, the content of the silane coupling agent in the base material layer is preferably from 0.01 wt% to 10 wt%. When the content of the silane coupling agent in the base material layer is caused to fall within the range, the base material layer can be suppressed from becoming excessively hard, and sufficient adhesiveness can be expressed between the base material layer and the antifouling layer. When the content of the silane coupling agent in the base material layer exceeds 10 wt%, the silane coupling agent may serve as a cross-linking point to make the base material layer hard. When the content of the silane coupling agent in the base material layer is less than 0.01 wt%, sufficient adhesiveness may not be expressed between the base material layer and the antifouling layer.

Any appropriate pressure-sensitive adhesive layer may be adopted as the pressure-sensitive adhesive layer to the extent that the effects of the present invention are not impaired. A material for such pressure-sensitive adhesive layer is, for example, an acrylic resin-based pressure-sensitive adhesive, an epoxy resin-based pressure-sensitive adhesive, an amino resin-based pressure-sensitive adhesive, a vinyl resin (e.g., vinyl acetate-based polymer)-based pressure-sensitive adhesive, a curable acrylic resin-based pressure-sensitive adhesive, or a silicone resin-based pressure-sensitive adhesive. The number of kinds of the materials for the pressure-sensitive adhesive layer may be only one, or may be two or more.

The 180° peeling adhesive strength of the pressure-sensitive adhesive layer at 23°C and a tension speed of 300 mm/min is preferably 30 N/20 mm or less, more preferably 20 N/20 mm or less, still more preferably 15 N/20 mm or less. When the 180° peeling adhesive strength of the pressure-sensitive adhesive layer at 23°C and a tension speed of 300 mm/min falls within the range, the pressure-sensitive adhesive tape for preventing adhesion of an aquatic organism of the present invention can be easily peeled from an adherend. When the 180° peeling adhesive strength of the pressure-sensitive adhesive layer at 23°C and a tension speed of 300 mm/min exceeds 30 N/20 mm, it becomes difficult to peel the pressure-sensitive adhesive tape for preventing adhesion of an aquatic organism of the present invention that has already been used from an adherend, and hence the working efficiency may remarkably deteriorate. A lower limit for the 180° peeling adhesive strength of the pressure-sensitive adhesive layer at 23°C and a tension speed of 300 mm/min is preferably 5 N/20 mm or more from such a viewpoint that sufficient adhesion can be maintained.

When the pressure-sensitive adhesive layer is brought into contact with seawater, the compressive modulus of elasticity of a portion in the pressure-sensitive adhesive layer brought into contact with the seawater is preferably 1.1 times or more, more preferably 1.2 times or more, still more preferably 1.5 times or more as large as a compressive modulus of elasticity in the pressure-sensitive adhesive layer before the contact with the seawater. When the compressive modulus of elasticity of the portion in the pressure-sensitive adhesive layer brought into contact with the seawater upon bringing of the pressure-sensitive adhesive layer into contact with the seawater is 1.1 times or more as large as the compressive modulus of elasticity in the pressure-sensitive adhesive layer before the contact with the seawater, the layer can express its good adhesion even in water. An upper limit for the ratio of the compressive modulus of elasticity of the portion in the pressure-sensitive adhesive layer brought into contact with the seawater upon bringing of the pressure-sensitive adhesive layer into contact with the seawater to the compressive modulus of elasticity in the pressure-sensitive adhesive layer before the contact with the seawater is preferably 100 times or less from the viewpoint of handleability.

The ratio of the adhesion of the pressure-sensitive adhesive layer at a peel angle of from 5° to 60° (temperature: 23°C, humidity: 65%RH, adherend: epoxy-based FRP plate, tension speed: 300 mm/min) to its adhesion at a peel angle of 180° is preferably 70% or less, more preferably 60% or less, still more preferably 50% or less. When the ratio (reduction ratio) is 70% or less, labor needed for the operation of peeling the tape can be effectively alleviated.

Any appropriate thickness may be adopted as the thickness of the pressure-sensitive adhesive layer depending on, for example, the applications and use environment of the pressure-sensitive adhesive tape for preventing adhesion of an aquatic organism of the present invention. The thickness of the pressure-sensitive adhesive layer is preferably 10 µm or more. When the thickness of the pressure-sensitive adhesive layer is less than 10 µm, there is a risk that the layer cannot sufficiently follow the shape of an adherend, its adhesion area reduces, and the layer cannot express sufficient adhesion. An upper limit for the thickness of the pressure-sensitive adhesive layer is preferably 100 µm or less from the viewpoint of handleability.

The pressure-sensitive adhesive tape for preventing adhesion of an aquatic organism of the present invention may be produced by any appropriate method. Examples of such method include: a method involving bonding the separately prepared base material layer and pressure-sensitive adhesive layer onto each other, and then applying an antifouling layer formation material onto the base material layer to form the antifouling layer; a method involving applying a pressure-sensitive adhesive layer formation material onto one surface of the base material layer to form the pressure-sensitive adhesive layer, and applying the antifouling layer formation material onto the other surface of the base material layer to form the antifouling layer; and a method involving coextruding a base material layer formation material and the pressure-sensitive adhesive layer formation material to form a laminate of the base material layer and the pressure-sensitive adhesive layer, and then applying the antifouling layer formation material onto the base material layer to form the antifouling layer.

A method of applying the antifouling layer formation material onto the base material layer is, for example, a spray, brush application, a roller, a curtain flow, a roll, dipping, or a coater. The antifouling layer may be formed by applying the antifouling layer formation material onto the base material layer according to any such method and drying the material at, for example, a temperature ranging from room temperature to 250°C (preferably a temperature ranging from room temperature to 180°C) . In particular, the following is a preferred embodiment in the pressure-sensitive adhesive tape for preventing adhesion of an aquatic organism of the present invention: the antifouling layer formation material is applied onto the base material layer by adopting a precision coater such as a comma coater.

### Examples

The present invention is specifically described below by way of Examples. However, the present invention is by no means limited to Examples below.

### <Evaluations for elongation and rupture point stress>

The elongation and rupture point stress of a base material layer were measured in conformity with JIS 7161, JIS 7162, and JIS 7127 by using a tensile tester (AUTOGRAPH AGS-X manufactured by Shimadzu Corporation) and analysis software (TRAPEZIUM X manufactured by Shimadzu Corporation).

### <Measurement of 180° peeling adhesive strength>.

The pressure-sensitive adhesive of a pressure-sensitive adhesive layer was transferred onto a polyester film (trade name: "S-10," manufactured by Toray Industries, Inc., thickness: 38 µm) with a hand roller to provide a pressure-sensitive adhesive sheet with a base material. The sheet was cut into a test piece having a size measuring 80 mm by 20 mm. A plastic FRP plate reinforced by loading glass cloth into an epoxy resin measuring 30 mm wide by 100 mm long by 2 mm thick was used as an adherend. The test piece was attached onto the adherend by reciprocating a 2-kg roller once and the resultant was left to stand at 23°C for 30 minutes. After that, its initial 180° peeling adhesive strength was measured. A tension speed was set to 300 mm/min.

### <Measurement of compressive modulus of elasticity>

The pressure-sensitive adhesive tape was immersed in commercially available simulated seawater at room temperature for 7 days in a state where its pressure-sensitive adhesive layer was in contact with the seawater, and the compressive moduli of elasticity of a portion in the pressure-sensitive adhesive layer brought into contact with the seawater before and after the immersion were compared. An evaluation was performed under the following conditions. The compressive moduli of elasticity were determined from a load-displacement curve obtained by the measurement with analysis software included with the apparatus.

### Evaluation apparatus: Nanoindenter, manufactured by Hysitron Inc., Tribo Scope

Used indenter: Berkovich, triangular pyramid type
Measurement method: single indentation measurement
Measurement temperature: 25°C
Indentation depth setting: about 1.1 µm

### <Outdoor antifouling test>

All pressure-sensitive adhesive tapes to be evaluated were each cut into a size measuring 10 cm by 10 cm and attached onto a plate made of vinyl chloride having substantially the same size. All of those plates (samples) were each further fixed onto a plate made of vinyl chloride measuring 23 cm wide by 90 cm long. The unit was set at a breakwater in a yacht harbor in the Seto Inland Sea (around Himeji) so as to be 2 m below (at the highest tide) or 0.5 m below (at the lowest tide) the sea level, and all sample surfaces were placed so as to be opposite to the wall surface of the breakwater. The samples were left to stand as they were for 3 months, and were then visually evaluated. Evaluation criteria are as described below.
○: A state where nearly no adhering organism is present, or even when an organism adheres, the organism can be easily peeled with a finger.
Δ: A state where an adhering organism adheres to about 10% of the surface.
×: A state where an adhering organism adheres to about 20% of the surface.
××: A state where an adhering organism adheres to about 30% or more of the surface.

### <Measurement of adhesion strength>

An adapter for measurement (an extension rod and an angle adapter) was attached onto the main body of a digital force gauge (FGN-50B manufactured by SHIMPO) to prepare a measuring machine.

A pressure-sensitive adhesive tape or film to which a barnacle had adhered was selected and the diameter of the barnacle was measured with a caliper.

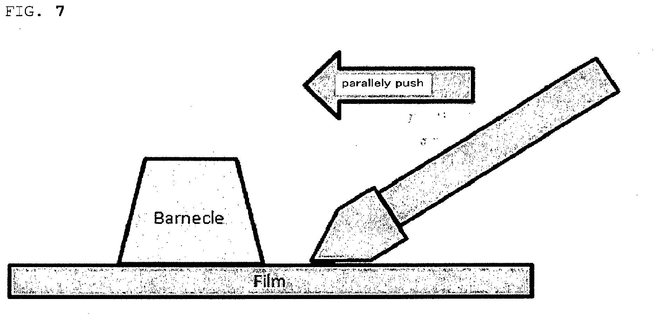

After the measured value of the measuring machine had been reset, as illustrated in FIG. **7****,** the adapter for measurement was quietly brought into contact with the lower portion of the outer shell of the barnacle adhering to the surface of the pressure-sensitive adhesive tape or film, and the measuring machine was slid so as to be parallel to the surface of the pressure-sensitive adhesive tape or film. Thus, the barnacle was peeled. The maximum load value (N) displayed on the measuring machine at this time was recorded.

The adhesion area (mm²) of the barnacle was calculated from the diameter of the barnacle measured in advance by using the formula for the area of a circle. A load per unit area (N/mm²) was calculated by dividing the recorded maximum load value by the adhesion area, and was defined as an adhesion strength.

### [Production Example 1]

### <Production of base material layer>

71 Parts by weight of isobornyl acrylate (trade name: "IBXA," manufactured by Osaka Organic Chemical Industry Ltd.), 19 parts by weight of n-butyl acrylate (BA, manufactured by TOAGOSEI CO., LTD.), and 10 parts by weight of acrylic acid (AA) as (meth) acrylic monomers; 68.4 parts by weight of poly(oxytetramethylene) glycol having a number-average molecular weight of 650 (PTMG650, manufactured by Mitsubishi Chemical Corporation) as a polyol, and 0.01 part by weight of dibutyltin dilaurate (DBTL) as a catalyst were loaded into a reaction vessel provided with a cooling tube, a temperature gauge, and a stirring device. While the mixture was stirred, 25.5 parts by weight of hydrogenated xylylene diisocyanate (HXDI, manufactured by Mitsui Chemical Polyurethane) were dropped to the mixture, followed by a reaction at 65°C for 5 hours. Thus, a urethane polymer-acrylic monomer mixture was obtained. After that, 6.1 parts by weight of hydroxyethyl acrylate (trade name: "ACRYCS HEA," manufactured by TOAGOSEI CO., LTD.) were further loaded into the mixture, and the whole was subjected to a reaction at 65°C for 1 hour to provide an acryloyl group-terminated urethane polymer-acrylic monomer mixture. After that, 1 part by weight of 3-acryloxypropyl trimethoxysilane (KBM-5103, manufactured by Shin-Etsu Chemical Co., Ltd.), 0.25 part by weight of diphenyl(2,4,6-trimethoxybenzoyl)phosphine oxide (trade name: "Lucirin TPO," manufactured by BASF) as a photopolymerization initiator, 1.25 parts by weight of a UV absorbing agent (trade name: "TINUVIN 123," manufactured by BASF), and 0.6 part by weight of an antioxidizing agent (trade name: "TINUVIN 400," manufactured by BASF) were added to the acryloyl group-terminated urethane polymer-acrylic monomer mixture to provide a syrup.

The syrup was applied onto the surface of a separator (trade name: "MRF38," manufactured by Mitsubishi Plastics, Inc., thickness: 38 µm) with an applicator to form a base material syrup layer having a thickness of 150 µm. A cover separator (trade name: "MRF38," manufactured by Mitsubishi Plastics, Inc., thickness: 38 µm) was attached onto the base material syrup layer with a hand roller, and the resultant was irradiated with UV light from a UV lamp (BL type) (UV irradiance: 3.4 mW/cm², cumulative dose: 2,000 mJ/cm²) to provide a base material layer having a thickness of 150 µm.

The produced base material layer was evaluated for its elongation and rupture point stress. As a result, the elongation was 420% and the rupture point stress was 27 MPa.

### [Production Example 2]

### <Production of pressure-sensitive adhesive layer>

90 Parts by weight of 2-ethylhexyl acrylate (2EHA, manufactured by TOAGOSEI CO., LTD.) and 10 parts by weight of acrylic acid (AA) as (meth) acrylic monomers, and 0.05 part by weight of 2,2-dimethoxy-1,2-diphenylethan-1-one (trade name: "IRGACURE 651," manufactured by BASF) as a photopolymerization initiator were loaded into a reaction vessel provided with a cooling tube, a nitrogen-introducing tube, a temperature gauge, and a stirring machine, and were dispersed. While the dispersion was stirred, UV light was applied from an upper portion in a stream of nitrogen to convert part of the monomers into a polymer, thereby adjusting the viscosity of the dispersion so that the dispersion could be applied. Thus, an acrylic monomer mixture was obtained. 0.08 Part by weight of 1,6-hexanediol diacrylate (HDDA) was added as a cross-linking agent to the acrylic monomer mixture, the mixture was applied onto the surface of a separator (trade name: "MRF50," manufactured by Mitsubishi Plastics, Inc., thickness: 50 µm) with an applicator, a cover separator (trade name: "MRF38," manufactured by Mitsubishi Plastics, Inc., thickness: 38 µm) was attached onto the mixture with a hand roller, and the resultant was irradiated with UV light from a UV lamp (BL type) (UV irradiance: 3.4 mW/cm², cumulative dose: 2,000 mJ/cm²) to provide a pressure-sensitive adhesive layer having a thickness of 50 µm.

The 180° peeling adhesive strength of the produced pressure-sensitive adhesive layer at 23°C and a tension speed of 300 mm/min was measured. As a result, the adhesive strength was found to be 13.3 N/20 mm.

### [Example 1]

### <Preparation of antifouling layer formation material>

A silicone oil (KF-50-100cs, nonreactive silicone oil, manufactured by Shin-Etsu Chemical Co., Ltd.) was added as an antifouling agent to a silicone resin (KE-445, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (1) to be applied onto a base material layer.

### <Production of pressure-sensitive adhesive tape>

The pressure-sensitive adhesive layer produced in Production Example 2 was bonded onto the base material layer produced in Production Example 1 by transfer. After that, the antifouling layer formation material (1) was applied onto the surface of the base material layer opposite to the pressure-sensitive adhesive layer with an applicator, and was dried in an oven at 150°C for 10 minutes to produce a pressure-sensitive adhesive tape (1).

The pressure-sensitive adhesive tape (1) had the construction "antifouling layer (thickness=150 µm)/base material layer (thickness=150 pm)/pressure-sensitive adhesive layer (thickness=50 µm)."

Table 2 shows the results of the evaluations.

### [Example 2]

A silicone oil (KF-50-100cs, nonreactive silicone oil, manufactured by Shin-Etsu Chemical Co., Ltd.) was added as an antifouling agent to a silicone resin (KE-445, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (2) to be applied onto a base material.

A pressure-sensitive adhesive tape (2) was produced with the antifouling layer formation material (2) in the same manner as in Example 1.

The pressure-sensitive adhesive tape (2) had the construction "antifouling layer (thickness=150 µm)/base material layer (thickness=150 pm)/pressure-sensitive adhesive layer (thickness=50 µm)."

Table 2 shows the results of the evaluations.

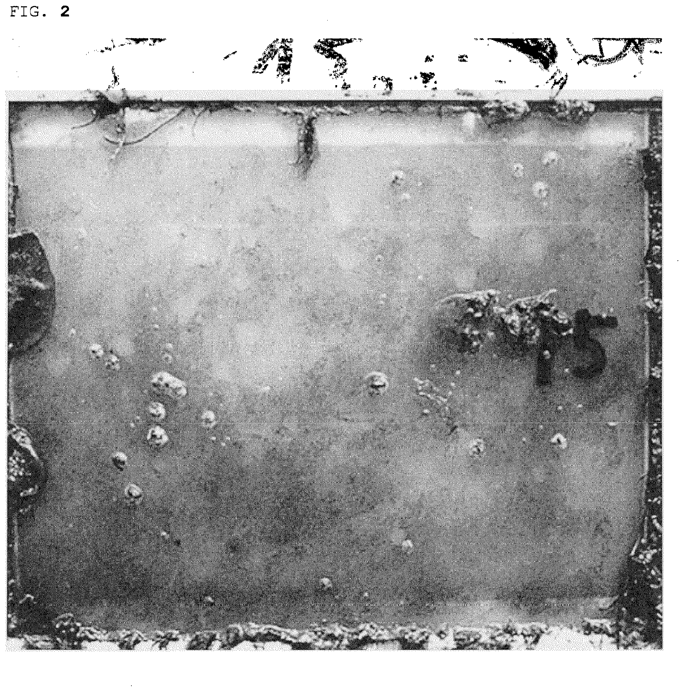

In addition, FIG. **2** shows a photographic view showing the state of the result of the outdoor antifouling test of the pressure-sensitive adhesive tape (2).

### [Example 3]

A liquid paraffin (hydrocarbon-based liquid paraffin, manufactured by Wako Pure Chemical Industries, Ltd.) was added as an antifouling agent to a silicone resin (KE-445, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (3) to be applied onto a base material.

A pressure-sensitive adhesive tape (3) was produced with the antifouling layer formation material (3) in the same manner as in Example 1.

The pressure-sensitive adhesive tape (3) had the construction "antifouling layer (thickness=150 µm)/base material layer (thickness=150 µm)/pressure-sensitive adhesive layer (thickness=50 µm)."

Table 2 shows the results of the evaluations.

### [Example 4]

A surfactant (DKS-NL-DASH400, nonionic ether-type surfactant, manufactured by Dai-ichi Kogyo Seiyaku Co., Ltd.) was added as an antifouling agent to a silicone resin (KE-445, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (4) to be applied onto a base material.

A pressure-sensitive adhesive tape (4) was produced with the antifouling layer formation material (4) in the same manner as in Example 1.

The pressure-sensitive adhesive tape (4) had the construction "antifouling layer (thickness=150 µm)/base material layer (thickness=150 µm)/pressure-sensitive adhesive layer (thickness=50 µm)."

Table 2 shows the results of the evaluations.

### [Example 5]

A silicone oil (KF-96-10cs, nonreactive silicone oil, manufactured by Shin-Etsu Chemical Co., Ltd.) was added as an antifouling agent to a silicone resin (KE-445, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (5) to be applied onto a base material.

A pressure-sensitive adhesive tape (5) was produced with the antifouling layer formation material (5) in the same manner as in Example 1.

The pressure-sensitive adhesive tape (5) had the construction "antifouling layer (thickness=150 µm)/base material layer (thickness=150 µm)/pressure-sensitive adhesive layer (thickness=50 µm)."

Table 2 shows the results of the evaluations.

### [Example 6]

A silicone oil (KF-96-100cs, nonreactive silicone oil, manufactured by Shin-Etsu Chemical Co., Ltd.) was added as an antifouling agent to a silicone resin (KE-445, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (6) to be applied onto a base material.

A pressure-sensitive adhesive tape (6) was produced with the antifouling layer formation material (6) in the same manner as in Example 1.

The pressure-sensitive adhesive tape (6) had the construction "antifouling layer (thickness=150 µm)/base material layer (thickness=150 pm)/pressure-sensitive adhesive layer (thickness=50 µm)."

Table 2 shows the results of the evaluations.

### [Example 7]

A silicone oil (KF-96-5000cs, nonreactive silicone oil, manufactured by Shin-Etsu Chemical Co., Ltd.) was added as an antifouling agent to a silicone resin (KE-445, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (7) to be applied onto a base material.

A pressure-sensitive adhesive tape (7) was produced with the antifouling layer formation material (7) in the same manner as in Example 1.

The pressure-sensitive adhesive tape (7) had the construction "antifouling layer (thickness=150 µm)/base material layer (thickness=150 µm)/pressure-sensitive adhesive layer (thickness=50 µm)."

Table 2 shows the results of the evaluations.

### [Example 8]

A silicone oil (KF-54, nonreactive silicone oil, manufactured by Shin-Etsu Chemical Co., Ltd.) was added as an antifouling agent to a silicone resin (KE-445, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (8) to be applied onto a base material.

A pressure-sensitive adhesive tape (8) was produced with the antifouling layer formation material (8) in the same manner as in Example 1.

The pressure-sensitive adhesive tape (8) had the construction "antifouling layer (thickness=150 µm)/base material layer (thickness=150 pm)/pressure-sensitive adhesive layer (thickness=50 µm)."

Table 2 shows the results of the evaluations.

### [Example 9]

A silicone oil (KF-6015, nonreactive silicone oil, manufactured by Shin-Etsu Chemical Co., Ltd.) was added as an antifouling agent to a silicone resin (KE-445, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (9) to be applied onto a base material.

A pressure-sensitive adhesive tape (9) was produced with the antifouling layer formation material (9) in the same manner as in Example 1.

The pressure-sensitive adhesive tape (9) had the construction "antifouling layer (thickness=150 µm)/base material layer (thickness=150 µm)/pressure-sensitive adhesive layer (thickness=50 µm)."

Table 2 shows the results of the evaluations.

### [Example 10]

A silicone oil (KF-414, nonreactive silicone oil, manufactured by Shin-Etsu Chemical Co., Ltd.) was added as an antifouling agent to a silicone resin (KE-445, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (10) to be applied onto a base material.

A pressure-sensitive adhesive tape (10) was produced with the antifouling layer formation material (10) in the same manner as in Example 1.

The pressure-sensitive adhesive tape (10) had the construction "antifouling layer (thickness=150 µm)/base material layer (thickness=150 µm)/pressure-sensitive adhesive layer (thickness=50 µm)."

Table 2 shows the results of the evaluations.

### [Example 11]

A silicone oil (KF-50-100cs, nonreactive silicone oil, manufactured by Shin-Etsu Chemical Co., Ltd.) was added as an antifouling agent to a silicone resin (KE-1842, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (11) to be applied onto a base material.

A pressure-sensitive adhesive tape (11) was produced with the antifouling layer formation material (11) in the same manner as in Example 1.

The pressure-sensitive adhesive tape (11) had the construction "antifouling layer (thickness=150 µm)/base material layer (thickness=150 µm)/pressure-sensitive adhesive layer (thickness=50 µm)."

Table 2 shows the results of the evaluations.

### [Example 12]

A silicone oil (KF-50-100cs, nonreactive silicone oil, manufactured by Shin-Etsu Chemical Co., Ltd.) was added as an antifouling agent to a silicone resin (LR 7665, thermal addition-type resin, manufactured by Wacker Asahikasei Silicone Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (12) to be applied onto a base material.

A pressure-sensitive adhesive tape (12) was produced with the antifouling layer formation material (12) in the same manner as in Example 1.

The pressure-sensitive adhesive tape (12) had the construction "antifouling layer (thickness=150 µm)/base material layer (thickness=150 pm)/pressure-sensitive adhesive layer (thickness=50 µm)."

Table 2 shows the results of the evaluations.

### [Example 13]

A silicone oil (KF-50-100cs, nonreactive silicone oil, manufactured by Shin-Etsu Chemical Co., Ltd.) was added as an antifouling agent to a silicone resin (KE-445, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (13) to be applied onto a base material.

A pressure-sensitive adhesive tape (13) was produced with the antifouling layer formation material (13) in the same manner as in Example 1.

The pressure-sensitive adhesive tape (13) had the construction "antifouling layer (thickness=150 µm)/base material layer (thickness=150 µm)/pressure-sensitive adhesive layer (thickness=50 µm)."

Table 2 shows the results of the evaluations.

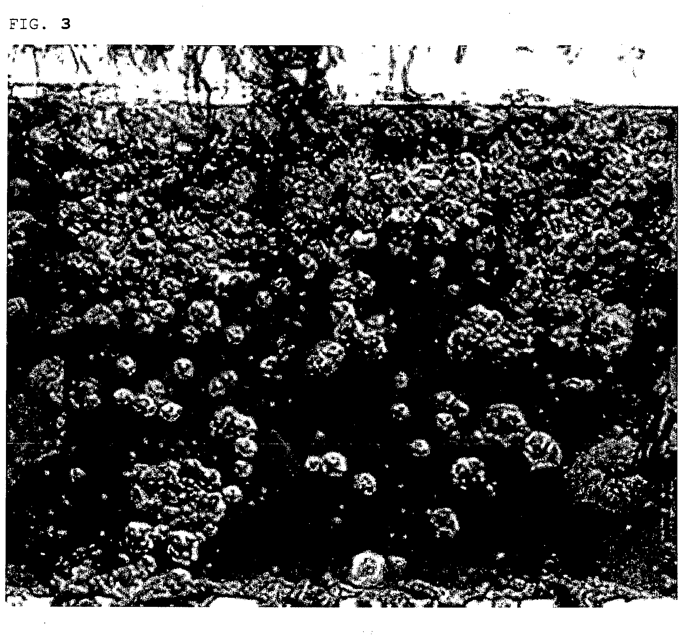

In addition, FIG. **3** shows a photographic view showing the state of the result of the outdoor antifouling test of the pressure-sensitive adhesive tape (13).

### [Example 14]

Only a silicone resin (KE-445, room temperature vulcanizing (RTV) resin, manufactured by Shin-Etsu Chemical Co., Ltd.) was stirred with a homomixer according to compounding shown in Table 1. After the stirring, the resin was defoamed to provide an antifouling layer formation material (14) to be applied onto a base material.

A pressure-sensitive adhesive tape (14) was produced with the antifouling layer formation material (14) in the same manner as in Example 1.

The pressure-sensitive adhesive tape (14) had the construction "antifouling layer (thickness=150 µm)/base material layer (thickness=150 µm)/pressure-sensitive adhesive layer (thickness=50 µm)."

Table 2 shows the results of the evaluations.

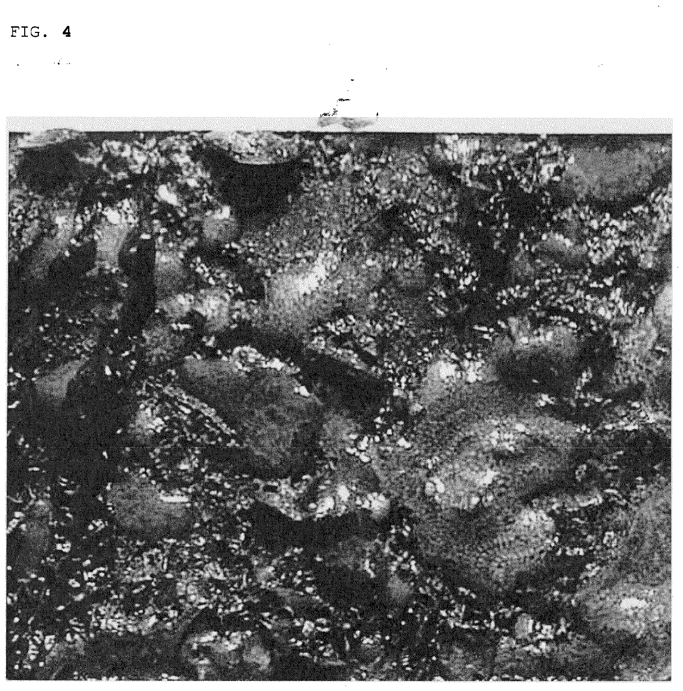

In addition, FIG. **4** shows a photographic view showing the state of the result of the outdoor antifouling test of the pressure-sensitive adhesive tape (14).

### [Comparative Example 1]

A silicone oil (KF-50-100cs, nonreactive silicone oil, manufactured by Shin-Etsu Chemical Co., Ltd.) was added as an antifouling agent to the syrup obtained in Production Example 1 (uncured resin before irradiation with a UV lamp) according to compounding shown in Table 1, and the antifouling agent was uniformly dissolved or dispersed in the resin by stirring the mixture with a homomixer. After that, the resin was cured with a UV lamp in the same manner as in Production Example 1 to provide a base material layer having a thickness of 150 µm. It should be noted that with regard to Comparative Example 1, the antifouling layer shown in Table 1 is interpreted as the base material layer.

The pressure-sensitive adhesive layer obtained in Production Example 2 was bonded onto the resultant base material layer by transfer to produce a pressure-sensitive adhesive tape (C1).

The pressure-sensitive adhesive tape (C1) had the construction "base material layer (thickness=150 µm)/pressure-sensitive adhesive layer (thickness=50 µm)."

Table 2 shows the results of the evaluations.

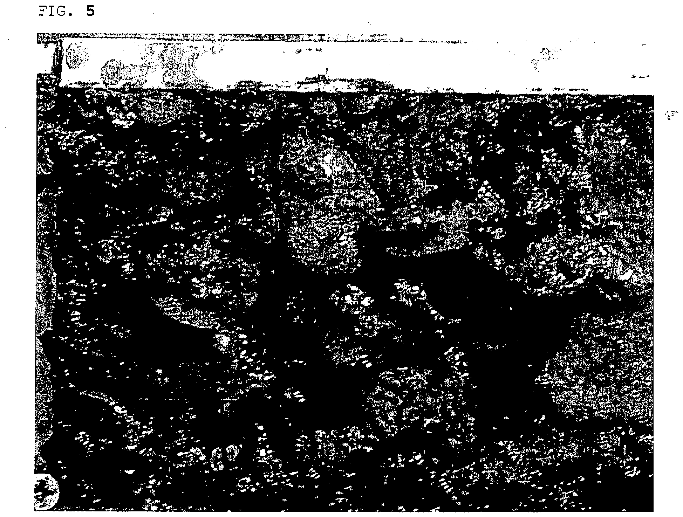

In addition, FIG. **5** shows a photographic view showing the state of the result of the outdoor antifouling test of the pressure-sensitive adhesive tape (C1).

### [Comparative Example 2]

A silicone oil (KF-50-100cs, nonreactive silicone oil, manufactured by Shin-Etsu Chemical Co., Ltd.) was added as an antifouling agent to a styrene-ethylene/butylene-styrene block polymer (SEBS, G1652, manufactured by Kraton Performance Polymers Inc.) dissolved in a toluene solvent according to compounding shown in Table 1, and the antifouling agent was uniformly dissolved or dispersed in the resin by stirring the mixture with a homomixer. After that, the mixture was applied onto a cover separator with an applicator and dried at 150°C for 10 minutes to provide a base material layer having a thickness of 150 µm. It should be noted that with regard to Comparative Example 2, the antifouling layer shown in Table 1 is interpreted as the base material layer.

The pressure-sensitive adhesive layer obtained in Production Example 2 was bonded onto the resultant base material layer by transfer to produce a pressure-sensitive adhesive tape (C2).

The pressure-sensitive adhesive tape (C2) had the construction "base material layer (thickness=150 µm)/pressure-sensitive adhesive layer (thickness=50 µm)."

Table 2 shows the results of the evaluations.

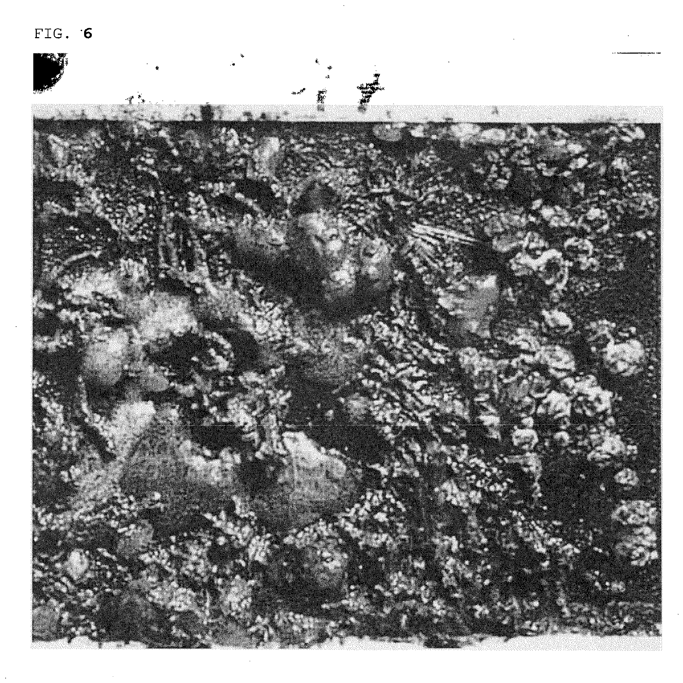

In addition, FIG. **6** shows a photographic view showing the state of the result of the outdoor antifouling test of the pressure-sensitive adhesive tape (C2).

### [Comparative Example 3]

A liquid paraffin (hydrocarbon-based liquid paraffin, manufactured by Wako Pure Chemical Industries, Ltd.) was added as an antifouling agent to the syrup obtained in Production Example 1 (uncured resin before irradiation with a UV lamp) according to compounding shown in Table 1, and the antifouling agent was uniformly dissolved or dispersed in the resin by stirring the mixture with a homomixer. After that, the resin was cured with a UV lamp in the same manner as in Production Example 1 to provide a base material layer having a thickness of 150 µm. It should be noted that with regard to Comparative Example 3, the antifouling layer shown in Table 1 is interpreted as the base material layer.

The pressure-sensitive adhesive layer obtained in Production Example 2 was bonded onto the resultant base material layer by transfer to produce a pressure-sensitive adhesive tape (C3).

The pressure-sensitive adhesive tape (C3) had the construction "base material layer (thickness=150 µm)/pressure-sensitive adhesive layer (thickness=50 µm)."

Table 2 shows the results of the evaluations.

### [Comparative Example 4]

A liquid paraffin (hydrocarbon-based liquid paraffin, manufactured by Wako Pure Chemical Industries, Ltd.) was added as an antifouling agent to a styrene-ethylene/butylene-styrene block polymer (SEBS, G1652, manufactured by Kraton Performance Polymers Inc.) according to compounding shown in Table 1, and then the antifouling agent was uniformly dissolved or dispersed in the resin by stirring the mixture with a homomixer. After the stirring, the mixture was defoamed to provide an antifouling layer formation material (C4) to be applied onto a base material.

A pressure-sensitive adhesive tape (C4) was produced with the antifouling layer formation material (C4) in the same manner as in Example 1.

The pressure-sensitive adhesive tape (C4) had the construction "antifouling layer (thickness=150 µm)/base material layer (thickness=150 µm)/pressure-sensitive adhesive layer (thickness=50 µm)."

Table 2 shows the results of the evaluations.

### [Comparative Example 5]

A silicone oil (KF-50-100cs, nonreactive silicone oil, manufactured by Shin-Etsu Chemical Co., Ltd.) was added as an antifouling agent to vinyl chloride (manufactured by Mitsubishi Chemical MKV Company, trade name: "VINIKA 37H") according to compounding shown in Table 1, and then the antifouling agent was uniformly dispersed in the resin by mixing the contents with a supermixer for 10 minutes. After the stirring, the mixture was sufficiently kneaded on two mill rolls heated to 180°C to produce a film (C5) having a thickness of 150 µm. An outdoor antifouling test was performed while the film (C5) was fixed onto a plate made of vinyl chloride cut into a size measuring 10 cm by 10 cm with a nail.

Table 2 shows the results of the evaluations.

### [Comparative Example 6]

A silicone oil (KF-50-100cs, nonreactive silicone oil, manufactured by Shin-Etsu Chemical Co., Ltd.) as an antifouling agent and ethyl acetate as a solvent were added to polymethyl methacrylate (manufactured by Wako Pure Chemical Industries, Ltd.) according to compounding shown in Table 1, and then the antifouling agent was uniformly dispersed in the resin by mixing the contents with a homomixer for 10 minutes. After the stirring, the mixture was applied onto a PET separator with an applicator and dried at 70°C to produce a film (C6) having a thickness of 150 µm. An outdoor antifouling test was performed while the film (C6) was fixed onto a plate made of vinyl chloride cut into a size measuring 10 cm by 10 cm with a nail.

Table 2 shows the results of the evaluations.

**[Table 1]**

| | Antifouling layer | | | |
|---|---|---|---|---|
| | Resin | Number of parts by weight of added resin | Antifouling agent | Number of parts by weight of added antifouling agent |
| Example 1 | Silicone resin KE-445 | 100 | Silicone oil KF-50-100cs | 10 |
| Example 2 | Silicone resin KE-445 | 100 | Silicone oil KF-50-100cs | 100 |
| Example 3 | Silicone resin KE-445 | 100 | Liquid paraffin | 10 |
| Example 4 | Silicone resin KE-445 | 100 | Surfactant | 10 |
| Example 5 | Silicone resin KE-445 | 100 | Silicone oil KF-96-10cs | 10 |
| Example 6 | Silicone resin KE-445 | 100 | Silicone oil KF-96-100cs | 10 |
| Example 7 | Silicone resin KE-445 | 100 | Silicone oil KF-96-5000cs | 10 |
| Example 8 | Silicone resin KE-445 | 100 | Silicone oil KF-54 | 10 |
| Example 9 | Silicone resin KE-445 | 100 | Silicone oil KF-6015 | 10 |
| Example 10 | Silicone resin KE-445 | 100 | Silicone oil KF-414 | 10 |
| Example 11 | Silicone resin KE-1842 | 100 | Silicone oil KF-50-100cs | 10 |
| Example 12 | Silicone resin LR 7665 | 100 | Silicone oil KF-50-100cs | 10 |
| Example 13 | Silicone resin KE-445 | 100 | Silicone oil KF-50-100cs | 1 |
| Example 14 | Silicone resin KE-445 | 100 | None | 0 |
| Comparative example 1 | Urethane acrylic resin | 100 | Silicone oil KF-50-100cs | 10 |
| Comparative example 2 | SEBS | 100 | Silicone oil KF-50-100cs | 10 |
| Comparative example 3 | Urethane acrylic resin | 100 | Liquid paraffin | 10 |
| Comparative example 4 | SEBS | 100 | Liquid paraffin | 10 |
| Comparative example 5 | Vinyl chloride | 100 | Silicone oil KF-50-100cs | 10 |
| Comparative example 6 | Polymethyl methacrylate | 100 | Silicone oil KF-50-100cs | 10 |

**[Table 2]**

| | Compressive modulus of elasticity | | Outdoor antifouling test | Adhesion strength (N/mm²) |
|---|---|---|---|---|
| | Compressive modulus of elasticity of pressure-sensitive adhesive layer before contact with seawater (MPa) | Compressive modulus of elasticity of pressure-sensitive adhesive layer after contact with seawater (MPa) | | |
| Example 1 | | | ○ | 0.04 |
| Example 2 | | | ○ | 0.01 |
| Example 3 | | | ○ | 0.03 |
| Example 4 | | | ○ | 0.07 |
| Example 5 | | | ○ | 0.04 |
| Example 6 | | | ○ | 0.05 |
| Example 7 | 4.04 | 18.80 | ○ | 0.06 |
| Example 8 | | | ○ | 0.04 |
| Example 9 | | | ○ | 0.05 |
| Example 10 | | | ○ | 0.03 |
| Example 11 | | | ○ | 0.05 |
| Example 12 | | | ○ | 0.04 |
| Example 13 | | | × | 0.13 |
| Example 14 | | | × | 0.14 |
| Comparative example 1 | | | ×× | 0.68 |
| Comparative example 2 | | | ×× | 0.45 |
| Comparative example 3 | | | ×× | 0.63 |
| Comparative example 4 | | | ×× | 0.58 |
| Comparative example 5 | - | - | ×× | 0.61 |
| Comparative example 6 | - | - | ×× | 0.35 |

### <Measurement of rupture elongation, rupture stress, and modulus of elasticity>

The base material layer was cut into a piece measuring 10 mm wide by 100 mm long, and an S-S test (temperature: 23°C, humidity: 65%RH, tension speed: 200 mm/min) was performed with a tensile tester (trade name: "Autograph AG-X 200N," manufactured by Shimadzu Corporation) while the piece was placed so that a chuck-to-chuck distance became 50 mm. Its rupture elongation and rupture stress were determined on the basis of the measured value. In addition, its modulus of elasticity was determined from the slope of the initial rise-up of the resultant S-S curve.

### <Measurement of elongation recovery ratio>

The base material layer was cut into a piece measuring 10 mm wide by 100 mm long, a hysteresis test at the time of 50% elongation (temperature: 23°C, humidity: 65%RH, tension speed: 200 mm/min, unloading speed: 200 mm/min) was performed with a tensile tester (trade name: "Autograph AG-X 200N," manufactured by Shimadzu Corporation) while the piece was placed so that a chuck-to-chuck distance became 50 mm, and a residual strain (amount of elongation at the time point when a load became 0 after elongation) was measured. Its elongation recovery ratio was calculated on the basis of the measured value from the equation "{25 mm (amount of elongation at the time of 50% elongation)-(residual strain)}/25 mm (amount of elongation at the time of 50% elongation)×100."

### <Measurement of adhesion>

A pressure-sensitive adhesive sheet was cut into a piece measuring 20 mm wide by 80 mm long, the piece was crimped onto an epoxy-based FRP plate by a method involving reciprocating a rubber roller having a weight of 2 kilograms-weight once, and the resultant was left to stand under the conditions of a temperature of 23°C and a humidity of 65%RH for 30 minutes. After that, a force needed for peeling at each peel angle was measured with a bending peel tester (trade name: "Yamamoto Bending Peel Measuring Machine YM-121," manufactured by ASAHI SEIKO CO., LTD.) (tension speed: 300 mm/min).

### <Evaluation for applicability>

A pressure-sensitive adhesive sheet was cut into a piece measuring 150 mm wide by 300 mm long, the piece was applied so as to follow the stem portion (curved surface) of a ship body, and the finish was visually evaluated in accordance with the following criteria. The application was performed with an application liquid and a squeegee while the sheet was placed so that its lengthwise direction was the direction of the ship body and the central portion of the ship body was along the center of the sheet.
○: The sheet beautifully follows the curved surface without any wrinkle.
Δ: Wrinkles are present in places but the sheet follows the curved surface.
×: The sheet cannot follow the curved surface and is floating.

### <Evaluation for reworkability>

The pressure-sensitive adhesive sheet used in the evaluation for applicability was peeled with a hand, the direction of the sheet was rotated by 90°, and application was similarly performed. An evaluation for reworkability was performed in accordance with the following criteria.
○: The same finish as that at the first time is obtained.
Δ: The finish is inferior to that at the first time but the sheet can be applied.
× : The sheet deforms and the same application as that at the first time cannot be performed.

### <Adhesiveness between antifouling layer and base material layer>

A pressure-sensitive adhesive sheet with an antifouling layer was evaluated for adhesiveness between the antifouling layer and its base material layer in accordance with the following criteria by: applying a force so that the antifouling layer and the base material layer were peeled from an end surface of the sheet with a finger; or bending or pulling the sheet with a hand.
○: The antifouling layer is not easily peeled with a finger, and the antifouling layer is not peeled even by bending or pulling.
Δ: The antifouling layer is not easily peeled with a finger, but the antifouling layer is peeled by bending or pulling.
×: The antifouling layer is easily peeled with a finger, and the antifouling layer is also peeled by bending or pulling.

### [Example 15] (Reference Example)

### (Pressure-sensitive adhesive layer)

90 Parts by weight of 2-ethylhexyl acrylate (2EHA, manufactured by TOAGOSEI CO. , LTD.) and 10 parts by weight of acrylic acid (AA) as (meth) acrylic monomers, and 0.1 part by weight of 2,2-dimethoxy-1,2-diphenylethan-1-one (trade name: "IRGACURE 651, " manufactured by BASF) as a photopolymerization initiator were loaded into a reaction vessel provided with a cooling tube, a nitrogen-introducing tube, a temperature gauge, and a stirring machine, and were dispersed. While the dispersion was stirred, UV light was applied from an upper portion in a stream of nitrogen to convert part of the monomers into a polymer, thereby adjusting the viscosity of the dispersion so that the dispersion could be applied. Thus, a (meth) acrylic monomer mixture was obtained. 0.08 Part by weight of 1,6-hexanediol diacrylate (HDDA) was added as a cross-linking agent to the (meth)acrylic monomer mixture, the mixture was applied onto the surface of a separator (trade name: "MRF38," manufactured by Mitsubishi Plastics, Inc., thickness: 50 µm) with an applicator, a cover separator (trade name: "MRF38," manufactured by Mitsubishi Plastics, Inc., thickness: 38 µm) was attached onto the mixture with a hand roller, and the resultant was irradiated with UV light from a UV lamp (BL type) (UV irradiance: 3.4 mW/cm², cumulative dose: 2,000 mJ/cm²) to provide a pressure-sensitive adhesive layer (15-A) having a thickness of 50 µm.

### (Base material layer)

71 Parts by weight of isobornyl acrylate (trade name: "IBXA," manufactured by Osaka Organic Chemical Industry Ltd.), 19 parts by weight of n-butyl acrylate (BA, manufactured by TOAGOSEI CO., LTD.), and 10 parts by weight of acrylic acid (AA) as (meth) acrylic monomers, 68.4 parts by weight of poly(oxytetramethylene) glycol having a number-average molecular weight of 650 (PTMG650, manufactured by Mitsubishi Chemical Corporation) as a polyol, and 0.01 part by weight of dibutyltin dilaurate (DBTL) as a catalyst were loaded into a reaction vessel provided with a cooling tube, a temperature gauge, and a stirring device. While the mixture was stirred, 25.5 parts by weight of hydrogenated xylylene diisocyanate (HXDI, manufactured by Mitsui Chemical Polyurethane) were dropped to the mixture, followed by a reaction at 65°C for 5 hours. Thus, a urethane polymer-(meth)acrylic monomer mixture was obtained. After that, 6.1 parts by weight of hydroxyethyl acrylate (trade name: "ACRYCS HEA, " manufactured by TOAGOSEI CO., LTD.) were loaded into the mixture, and the whole was subjected to a reaction at 65°C for 1 hour to provide an acryloyl group-terminated urethane polymer-(meth)acrylic monomer mixture.

1 Part by weight of 3-acryloxypropyl trimethoxysilane (KBM-5103, manufactured by Shin-Etsu Chemical Co., Ltd.), 0.25 part by weight of diphenyl(2,4,6-trimethoxybenzoyl)phosphine oxide (trade name: "Lucirin TPO," manufactured by BASF) as a photopolymerization initiator, 1.25 parts by weight of a UV absorbing agent (trade name: "TINUVIN 123," manufactured by BASF), and 0.6 part by weight of an antioxidizing agent (trade name: "TINUVIN 400, " manufactured by BASF) were added to the resultant acryloyl group-terminated urethane polymer-(meth)acrylic monomer mixture to provide a syrup.

The resultant syrup was applied onto the surface of a separator (trade name: "MRF38," manufactured by Mitsubishi Plastics, Inc., thickness: 38 µm) with an applicator to form a syrup layer having a thickness of 150 µm. A cover separator (trade name: "MRF38," manufactured by Mitsubishi Plastics, Inc., thickness: 38 µm) was attached onto the syrup layer with a hand roller, and the resultant was irradiated with UV light from a UV lamp (BL type) (UV irradiance: 3.4 mW/cm², cumulative dose: 2,000 mJ/cm²) to provide a base material layer (15-B).

### (Pressure-sensitive adhesive tape)

The resultant pressure-sensitive adhesive layer (15-A) and base material layer (15-B) were bonded onto each other with a hand roller to provide a tape. Then, a silicone elastomer (BIOCLEAN DK manufactured by CHUGOKU MARINE PAINTS, LTD.) was applied onto the base material layer (15-B) of the tape with an applicator to form a syrup layer having a thickness of 150 µm. The resultant was cured at 150°C for 10 minutes to produce a pressure-sensitive adhesive tape (15).

The pressure-sensitive adhesive tape (15) had the construction "antifouling layer (thickness=150 µm)/base material layer (thickness=150 µm)/pressure-sensitive adhesive layer (thickness=50 µm)."

Table 3 shows the results of the evaluations.

### [Comparative Example 7]

### (Pressure-sensitive adhesive layer)

A pressure-sensitive adhesive layer (C7-A) having a thickness of 50 µm was obtained in the same manner as in Example 15.

### (Base material layer)

A polyethylene terephthalate (PET) base material (trade name: "T100C," manufactured by Mitsubishi Plastics, Inc., thickness: 38 µm) was used as a base material layer (C7-B).

### (Pressure-sensitive adhesive tape)

The resultant pressure-sensitive adhesive layer (C7-A) and base material layer (C7-B) were bonded onto each other with a hand roller to provide a tape. Then, a silicone elastomer (BIOCLEAN DK manufactured by CHUGOKU MARINE PAINTS, LTD.) was applied onto the base material layer (C7-B) of the tape with an applicator to form a syrup layer having a thickness of 150 µm. The resultant was cured at 150°C for 10 minutes to produce a pressure-sensitive adhesive tape (C7).

The pressure-sensitive adhesive tape (C7) had the construction "antifouling layer (thickness=150 µm)/base material layer (thickness=38 µm)/pressure-sensitive adhesive layer (thickness=50 µm)."

Table 3 shows the results of the evaluations.

### [Comparative Example 8]

### (Pressure-sensitive adhesive layer)

A pressure-sensitive adhesive layer (C8-A) having a thickness of 50 µm was obtained in the same manner as in Example 15.

### (Base material layer)

A PE base material (NSO #60, thickness: 60 µm, manufactured by Okura Industrial Co., Ltd.) was used as a base material layer (C8-B).

### (Pressure-sensitive adhesive tape)

The resultant pressure-sensitive adhesive layer (C8-A) and base material layer (C8-B) were bonded onto each other with a hand roller to provide a tape. Then, a silicone elastomer (BIOCLEAN DK manufactured by CHUGOKU MARINE PAINTS, LTD.) was applied onto the base material layer (C8-B) of the tape with an applicator to form a syrup layer having a thickness of 150 µm. The resultant was cured at 150°C for 10 minutes to produce a pressure-sensitive adhesive tape (C8).

The pressure-sensitive adhesive tape (C8) had the construction "antifouling layer (thickness=150 µm)/base material layer (thickness=60 µm)/pressure-sensitive adhesive layer (thickness=50 µm)."

Table 3 shows the results of the evaluations.

**[Table 3]**

| | | Example 15* | Comparative Example 7 | Comparative Example 8 |
|---|---|---|---|---|
| Base material layer physical property | Rupture elongation (%) | 415 | 230 | 417 |
| | Rupture stress (MPa) | 27.1 | 197.3 | 20.5 |
| | Modulus of elasticity (MPa) | 4.9 | 1,842.1 | 196.5 |
| | Elongation recovery ratio (%) | 92% | 57% | 24% |
| Bending adhesion (N/20 mm) A value in parentheses represents a ratio when a value at 180° is defined as 100%. | 180° | 15.5 | 13.8 | 8.5 |
| | 90° | 6.4 (41%) | 10.4 (75%) | 8.9 (105%) |
| | 75° | 6.2 (40%) | 11.4 (83%) | 10.1 (119%) |
| | 60° | 6.2 (40%) | 13.4 (97%) | 11.6 (136%) |
| | 45° | 5.7 (37%) | 14.8 (107%) | 14.9 (175%) |
| | 30° | 5.2 (34%) | 34.1 (247%) | 16.6 (195%) |
| | 15° | 5.3 (34%) | 52.7 (382%) | 17.7 (208%) |
| | 5° | 4.7 (30%) | - | 18.2 (214%) |
| Applicability | | ○ | × | × |
| Reworkability | | ○ | ○ | × |
| Adhesiveness between antifouling layer and base material layer | | ○ | × | × |
| * Reference Example | | | | |

The pressure-sensitive adhesive tape for preventing adhesion of an aquatic organism of the present invention can be suitably utilized in an underwater structure (such as a ship, a buoy, a harbor facility, a maritime oil field facility, a water passage for power plant cooling water, a water passage for factory cooling water, or a water floating passage) because the tape can prevent an aquatic organism from adhering to the structure to proliferate.

### Reference Signs List

**1** release film
**2** antifouling layer
**3** base material layer
**4** pressure-sensitive adhesive layer
**100** pressure-sensitive adhesive tape for preventing adhesion of aquatic organism

## Claims

1. A pressure-sensitive adhesive tape for preventing adhesion of an aquatic organism, comprising an antifouling layer, a base material layer, and a pressure-sensitive adhesive layer in the stated order, wherein the antifouling layer comprises a silicone resin, wherein the content of the silicone resin in the antifouling layer is from 50 wt% to 95 wt%, and the base material layer comprises an elastomer resin,
wherein the antifouling layer comprises an antifouling agent,
wherein a content of the antifouling agent with respect to the silicone resin is 5 wt% to 100 wt%, and
wherein the antifouling agent is at least one kind selected from a dimethyl silicone oil and a phenyl methyl silicone oil represented by the general formula (I) 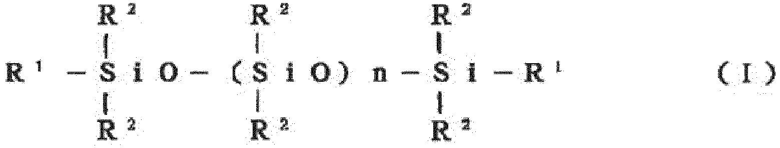
wherein n represents an integer of from 0 to 150, in the dimethyl silicone oil all of R¹'s and R²'s each represent a methyl group, and the phenyl methyl silicone oil is obtained by substituting part of the methyl groups of any such dimethyl silicone oil with phenyl groups, wherein the base material layer has an elongation of 100% or more and a rupture point stress of 10 MPa or more,
wherein the elongation and the rupture point stress are determined as disclosed in the description.

2. A pressure-sensitive adhesive tape for preventing adhesion of an aquatic organism according to claim 1, wherein the base material layer comprises a silane coupling agent.

3. A pressure-sensitive adhesive tape for preventing adhesion of an aquatic organism according to claim 2, wherein a content of the silane coupling agent in the base material layer is from 0.01 wt% to 10 wt%.

## Patentansprüche

1. Haftklebeband zur Verhinderung des Anhaftens eines Wasserorganismus, umfassend eine Antifouling-Schicht, eine Basismaterialschicht und eine Haftklebeschicht in der angegebenen Reihenfolge, wobei die Antifouling-Schicht ein Silikonharz umfasst, wobei der Gehalt des Silikonharzes in der Antifouling-Schicht von 50 Gew.-% bis 95 Gew.-% beträgt und die Basismaterialschicht ein Elastomerharz umfasst,
wobei die Antifouling-Schicht ein Antifouling-Mittel umfasst, wobei der Gehalt des Antifouling-Mittels in Bezug auf das Silikonharz 5 Gew.-% bis 100 Gew.-% beträgt, und
wobei das Antifouling-Mittel mindestens eine Art, ausgewählt aus einem Dimethylsilikonöl und einem Phenylmethylsilikonöl, ist, dargestellt durch die allgemeine Formel (I) 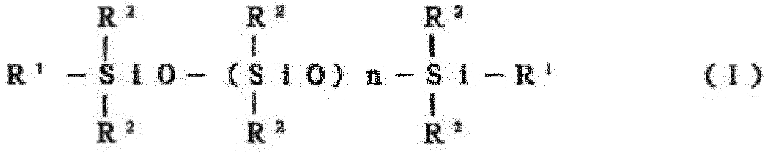
wobei n eine ganze Zahl von 0 bis 150 darstellt, in dem Dimethylsilikonöl alle R¹ und R² jeweils eine Methylgruppe darstellen, und das Phenylmethylsilikonöl durch Substituieren eines Teils der Methylgruppen eines solchen Dimethylsilikonöls mit Phenylgruppen erhalten wird, wobei die Basismaterialschicht eine Dehnung von 100% oder mehr und eine Bruchpunktspannung von 10 MPa oder mehr aufweist,
wobei die Dehnung und die Bruchpunktspannung wie in der Beschreibung offenbart bestimmt werden.

2. Haftklebeband zur Verhinderung des Anhaftens eines Wasserorganismus gemäß Anspruch 1, wobei die Basismaterialschicht einen Silanhaftvermittler umfasst.

3. Haftklebeband zur Verhinderung des Anhaftens eines Wasserorganismus gemäß Anspruch 2, wobei der Gehalt des Silanhaftvermittlers in der Basismaterialschicht von 0.01 Gew.-% bis 10 Gew.-% beträgt.

## Revendications

1. Ruban adhésif sensible à la pression pour empêcher l'adhérence d'un organisme aquatique, comprenant une couche antifouling, une couche de matière de base et une couche adhésive sensible à la pression dans l'ordre indiqué, dans lequel la couche antifouling comprend une résine de silicone, dans lequel la teneur de la résine de silicone dans la couche antifouling est de 50 % en poids à 95 % en poids, et la couche de matière de base comprend une résine élastomère,
dans lequel la couche antifouling comprend un agent antifouling, dans lequel une teneur en agent antifouling par rapport à la résine de silicone est de 5 % en poids à 100 % en poids, et
dans lequel l'agent antifouling est au moins une sorte sélectionnée parmi une huile de diméthylsilicone et une huile de phénylméthylsilicone représentées par la formule générale (I) 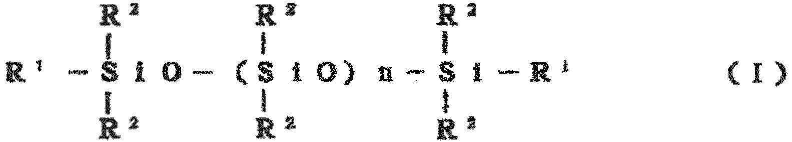
dans lequel n représente un entier de 0 à 150, dans l'huile de diméthylsilicone tous les R¹ et R² représentent chacun un groupement méthyle, et l'huile de phénylméthylsilicone est obtenue en substituant une partie des groupements méthyle d'une quelconque telle huile de diméthylsilicone par des groupements phényle, dans lequel la couche de matière de base présente une élongation de 100 % ou plus et une contrainte au point de rupture de 10 MPa ou plus,
dans lequel l'élongation et la contrainte au point de rupture sont déterminées telles que divulguées dans la description.

2. Ruban adhésif sensible à la pression pour empêcher l'adhérence d'un organisme aquatique selon la revendication 1, dans lequel la couche de matière de base comprend un agent de couplage silane.

3. Ruban adhésif sensible à la pression pour empêcher l'adhérence d'un organisme aquatique selon la revendication 2, dans lequel une teneur de l'agent de couplage silane dans la couche de matière de base est de 0,01 % en poids à 10 % en poids.
